# EUROPEAN PATENT APPLICATION

(11) **EP 2 982 239 A1**
(43) Date of publication of application: **10.02.2016**
(21) Application number: 14778821.0
(22) Date of filing: 03.04.2014
(51) Int. Cl.: A01G 31/00, A01G 1/00, A01G 7/00

(54) **PLANT CULTIVATION SYSTEM, CULTIVATION METHOD UTILIZING SAME AND MANUFACTURING METHOD THEREFOR**

(30) Priority: 03.04.2013 JP 2013077949
(71) Applicant: Mitsui Chemicals, Inc., Tokyo 105-7117 (JP); Phytoculture Control Co., Ltd., Osaka 536-0008 (JP)
(72) Inventor: MATSUNO, Hirozumi, Tokyo 105-7117 (JP); TANAKA, Kunisuke, Osaka-shi Osaka 536-0008 (JP); SUZUMURA, Daisuke, Osaka-shi Osaka 536-0008 (JP); HASEGAWA, Ryo, Osaka-shi Osaka 536-0008 (JP)
(74) Representative: Wills, Andrew Jonathan
(86) International application number: PCT/JP2014/059849
(87) International publication number: WO 2014/163145

(57) **Abstract**

The object of this invention is to provide a plant cultivation system to efficiently supply the elements necessary for plant growth to the plant cultivation materials, which provides a cultivation environment for accelerating plant growth by supplying the elements necessary for plant growth, a cultivation method using the system and a production method for the system. This invention provides a plant cultivation system comprising a plant cultivation material, which provides a cultivation environment for accelerating plant growth by supplying the elements necessary for plant growth, and a container storing a liquid such as water, a nutrition solution and agrochemical products or a liquid supply tank storing a liquid such as water, a nutrition solution and agrochemical products in combination with tubing.

## Description

### Technical Field

This invention relates to a plant cultivation system, a plant cultivation method using the plant cultivation system and a production method for the plant cultivation system.

### Background Art

A large number of systems for cultivating plants have been reported. For example, furrow irrigation or sprinkler, which enables to automatically supply water or a nutrient solution, drip irrigation system (Patent Literature 1) or Eco-Ag (Patent Literature 2) manufactured by Developmental Technologies, which enables to reduce the amount of supplied water or a nutrient solution; and hydroponic cultivation system (Patent Literature 3) or mist cultivation system (Patent Literature 4) used in plant factories or the like has been known.

However, in the furrow irrigation or sprinkler, water resource is not only wasted but environmental load is also made increasing by soil pollution since large amount of water or a nutrient solution more than required is released to the environment. In the drip irrigation system or Eco-Ag, the consumption of water or a nutrient solution is made reduced compared to furrow irrigation or sprinkler since the amount of supplied water or a nutrient solution can be controlled, but the reduction level is still insufficient. And in addition, a risk to make environmental load such as soil pollution increasing is still remained since water or a nutrient solution is supplied through soils.

On the other hand, in hydroponic cultivation system used in plant factories or the like, the efficient use of water or a nutrient solution is made available by circulation and reuse of water or a nutrient solution, but the supply of air required for growth of plants is insufficient. In mist cultivation system, the supply of water or a nutrient solution is still insufficient. Thus, no cultivation environment suitable for plant growth has been provided yet.

In order to improve the aforementioned cultivation condition, plant cultivation system using ceramics (Patent Literatures 5, 6) was discovered, but the capability to supply water or a nutrient solution required for plant growth is still insufficient in some cases, and this system has not yet provided the plant cultivation environment capable to supply the elements necessary for the plant growth as much as plants want whenever plants want.

### Reference List

### Patent Literature

Patent Literature 1: Israel Patent Publication No. 0053463
Patent Literature 2: U.S. Patent No. 7198431
Patent Literature 3: JP49035539B
Patent Literature 4: JP06-197647A
Patent Literature 5: JP3044006B
Patent Literature 6: JP09-308396A

### Summary of Invention

### Technical Problems to be solved by the Invention

The challenge to be solved by this invention is to provide a plant cultivation system to efficiently supply the elements to the seed-nursery integrated plant cultivation materials comprising the plant cultivation materials in which seeds and/or nurseries are put and which provide plant cultivation environment under which plants can absorb the elements necessary for the plant growth, i.e., plant growth elements, as much as plants want whenever plants want for the purpose of accelerating plant growth, a cultivation method using the system and a production method for the system.

### Means for Solving the Problems

As a result of intensive studies to solve the aforementioned challenge, the inventors discovered that the plant cultivation system capable to efficiently supply plant growth elements to the plant cultivation materials having a liquid retentivity and a liquid transitivity, and comprising a structure capable to provide the environment suitable for plant respiration could accelerate the plant growth since plants could absorb from the materials the amount of the elements necessary for the plant growth as much as plants wanted whenever plants wanted.

This invention to solve the aforementioned challenge is as follows.
(1) A plant cultivation system, to efficiently supply the elements necessary for the plant growth to a seed-nursery integrated plant cultivation material, comprising the plant cultivation materials in which seeds and/or nurseries are put, and which provide a plant cultivation environment under which plants can absorb the amount of the elements necessary for the plant growth as much as plants want whenever plants want for the purpose of accelerating the plant growth.
(2) A plant cultivation system, to efficiently supply the elements necessary for the plant growth to a seed-nursery integrated plant cultivation material comprising the plant cultivation materials which have a liquid retentiity and a liquid transitivity, in which seeds and/or nurseries are put, and which provide a plant cultivation environment under which plants can absorb the amount of the elements necessary for the plant growth as much as plants want whenever plants want for the purpose of accelerating the plant growth.
(3) A plant cultivation system, to efficiently supply the elements necessary for the plant growth to a seed-nursery integrated plant cultivation material comprising the plant cultivation materials which are capable to retain the liquid containing at least one of water, a nutrient solution and agrochemical products, which have the cavities for smooth transitivity of the liquid in the materials, in which seeds and/or nurseries are put, and which provide a plant cultivation environment under which plants can absorb the amount of the elements necessary for the plant growth as much as plants want whenever plants want for the purpose of accelerating the plant growth.
(4) A plant cultivation system, to efficiently supply the elements necessary for the plant growth to a seed-nursery integrated plant cultivation material comprising the plant cultivation materials which are capable to retain the liquid containing at least one of water, a nutrient solution and agrochemical products, which have the cavities for smooth transitivity of the liquid in the materials, which comprise the layered structures capable to control the root growth, in which seeds and/or nurseries are put, and which provide a plant cultivation environment under which plants can absorb the amount of the elements necessary for the plant growth as much as plants want whenever plants want for the purpose of accelerating the plant growth.
(5) A plant cultivation system, to efficiently supply the elements necessary for the plant growth to a seed-nursery integrated plant cultivation material comprising the plant cultivation materials which are capable to retain the liquid containing at least one of water, a nutrient solution and agrochemical products, which have the cavities for smooth transitivity of the liquid in the materials, which comprise the layered structures capable to control the root growth so that roots can respire sufficient air, in which seeds and/or nurseries are put, and which provide a plant cultivation environment under which plants can absorb the amount of the elements necessary for the plant growth as much as plants want whenever plants want for the purpose of accelerating the plant growth.
(6) A plant cultivation method using the plant cultivation system according to any one of (1) to (5).
(7) A production method for the plant cultivation system according to any one of (1) to (5).
(8) A plant growth element supply system, to comprise the plant cultivation materials which provide a plant cultivation environment under which plants can absorb the amount of the elements necessary for the plant growth as much as plants want whenever plants want for the purpose of accelerating the plant growth in the materials, and the materials and/or the equipment and/or the facilities to efficiently supply the elements to the plant cultivation materials.
(9) A plant growth element supply system, to comprise the plant cultivation materials which have a liquid retentiity and a liquid transitivity and which provide a plant cultivation environment under which plants can absorb the amount of the elements necessary for the plant growth as much as plants want whenever plants want for the purpose of accelerating the plant growth in the materials, and the materials and/or the equipment and/or the facilities to efficiently supply the elements to the plant cultivation materials.
(10) A plant growth element supply system, to comprise the plant cultivation materials, which are capable to retain the liquid containing at least one of water, a nutrient solution and agrochemical products, which have the cavities for smooth transitivity of the liquid in the materials, and which provide a plant cultivation environment under which plants can absorb the amount of the elements necessary for the plant growth as much as plants want whenever plants want for the purpose of accelerating the plant growth in the materials, and the materials and/or the equipment and/or the facilities to efficiently supply the elements to the plant cultivation materials.
(11) A plant growth element supply system, to comprise the plant cultivation materials, which are capable to retain the liquid containing at least one of water, a nutrient solution and agrochemical products, which have the cavities for smooth transitivity of the liquid in the materials, which comprise the layered structures capable to control the root growth, and which provide a plant cultivation environment under which plants can absorb the amount of the elements necessary for the plant growth as much as plants want whenever plants want for the purpose of accelerating the plant growth, and the materials and/or the equipment and/or the facilities to efficiently supply the elements to the plant cultivation materials.
(12) A plant growth element supply system, to comprise the plant cultivation materials, which are capable to retain the liquid containing at least one of as water, a nutrient solution and agrochemical products, which have the cavities for smooth transitivity of the liquid in the materials, which comprise a layered structures capable to control the root growth so that roots can respire sufficient air, and which provide a plant cultivation environment under which plants can absorb the amount of the elements necessary for the plant growth as much as plants want whenever plants want for the purpose of accelerating the plant growth, and the materials and/or the equipment and/or the facility to efficiently supply the elements to the plant cultivation materials.
(13) A plant cultivation method using the plant growth element supply system according to any one of (8) to (12).
(14) A plant growth element supply method using the plant growth element supply system according to any one of (8) to (12).
(15) A production method for the plant growth element supply system according to any one of (8) to (12).

### Effects of Invention

The plant growth is made accelerated, the crop yield and the quality are made higher, and the supply of the elements necessary for the plant growth can be controlled to the minimum required, since plants can absorb the amounts of the elements necessary for the plant growth as much as plants want whenever plants want by utilizing the plant cultivation system, the plant cultivation method using the plant cultivation system and the production method for the plant cultivation system of this invention.

### Brief Description of Drawings

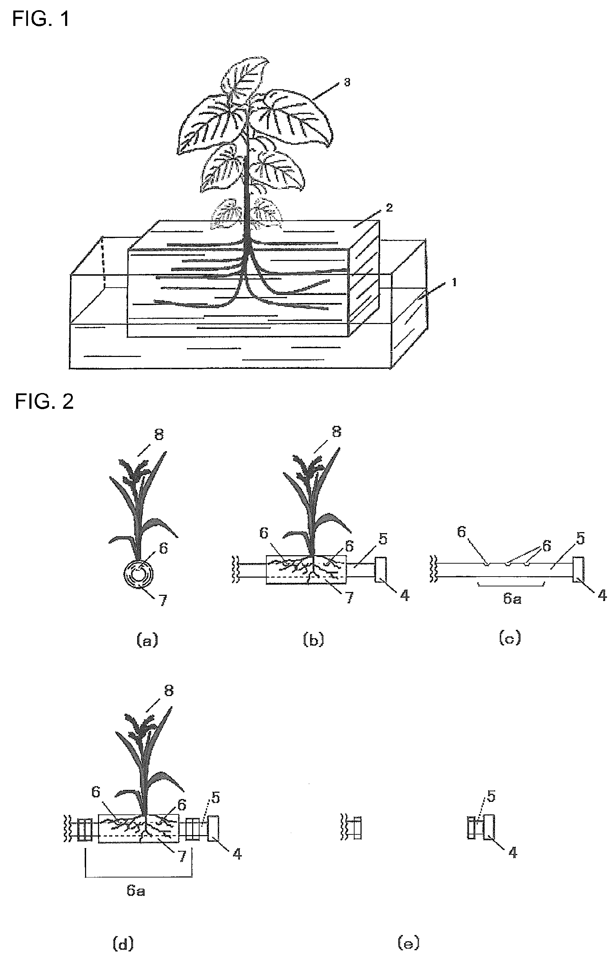

[Figure 1] A schematic view of the plant cultivation system of this invention, comprising plant cultivation materials and a container is shown in Figure 1.
[Figure 2] Schematic views of the plant cultivation system of this invention, comprising cylindrically processed plant cultivation materials and tubing are shown in Figure 2. A front view of the cylindrically processed plant cultivation materials in which the tubing is inserted is shown as a sectional view at the plane perpendicular to the major-axis direction of the plant cultivation materials in Figure 2 (a), a side view thereof is shown in Figure 2 (b), a side view of the outlets of the elements is shown in Figure 2 (c), a side view of detachable connection modules is shown in Figure 2 (d), and a side view of removed connection modules is shown in Figure 2 (e).

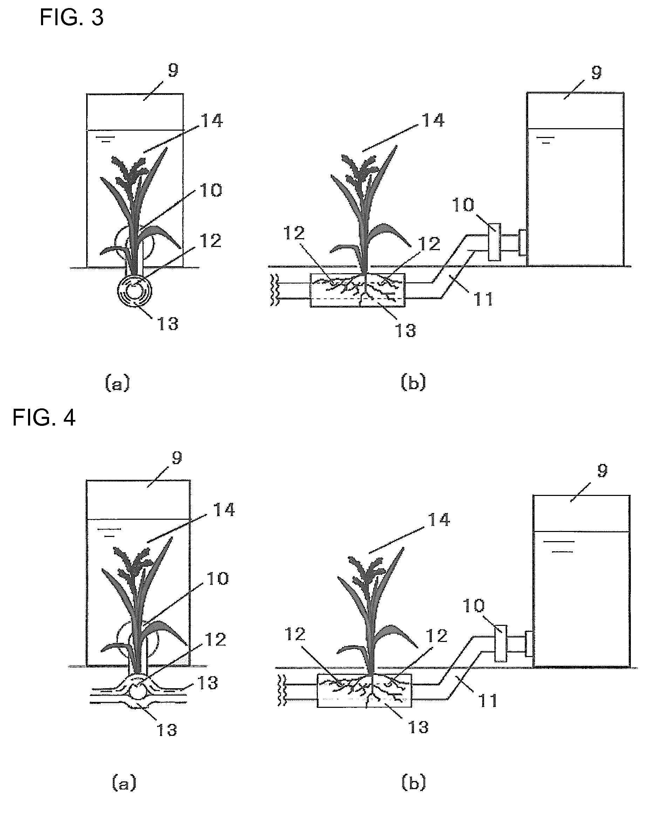

[Figure 3] Schematic views of the plant cultivation system of this invention, comprising cylindrically processed plant cultivation materials, tubing and a liquid-supply tank are shown in Figure 3. A front view of the cylindrically processed plant cultivation materials in which the tubing is inserted is shown in Figure 3 (a) as a sectional view at the plane perpendicular to the major-axis direction of the plant cultivation materials, and a side view thereof is shown in Figure 3 (b).
[Figure 4] Schematic views of the plant cultivation system of this invention, comprising sheet-formed plant cultivation materials, tubing and a liquid-supply tank are shown in Figure 4. A front view of the two sheet stacked-formed plant cultivation materials between which the tubing is inserted is shown in Figure 4 (a) as a sectional view at the plane perpendicular to the sheet face, and a side view thereof is shown in Figure 4 (b).

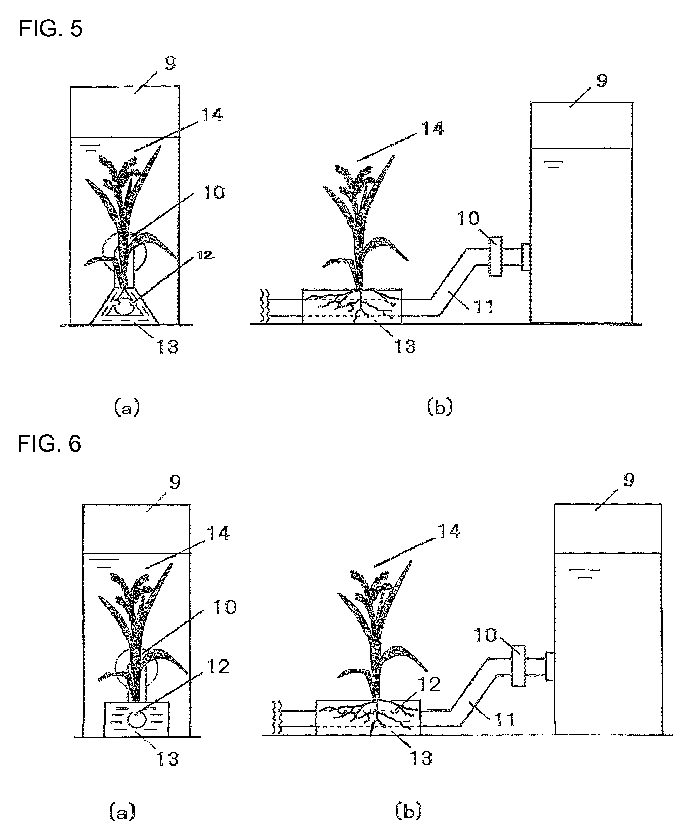

[Figure 5] Schematic views of the plant cultivation system of this invention, comprising the plant cultivation materials processed into a triangle pole form, the tubing and a liquid-supply tank are shown in Figure 5. A front view of the plant cultivation materials processed into a triangle pole form, in which the tubing is inserted is shown in Figure 5 (a) as a sectional view at the plane perpendicular to the major-axis direction of the plant cultivation materials, and a side view thereof is shown in Figure 5 (b).
[Figure 6] Schematic views of the plant cultivation system of this invention, comprising the plant cultivation materials processed into a cuboid form, the tubing and a liquid-supply tank are shown in Figure 6. A front view of the plant cultivation material processed into a cuboid form, in which the tubing is inserted is shown in Figure 6 (a) as a sectional view at the plane perpendicular to the major-axis direction of the plant cultivation materials, and a side view thereof is shown in Figure 6 (b).

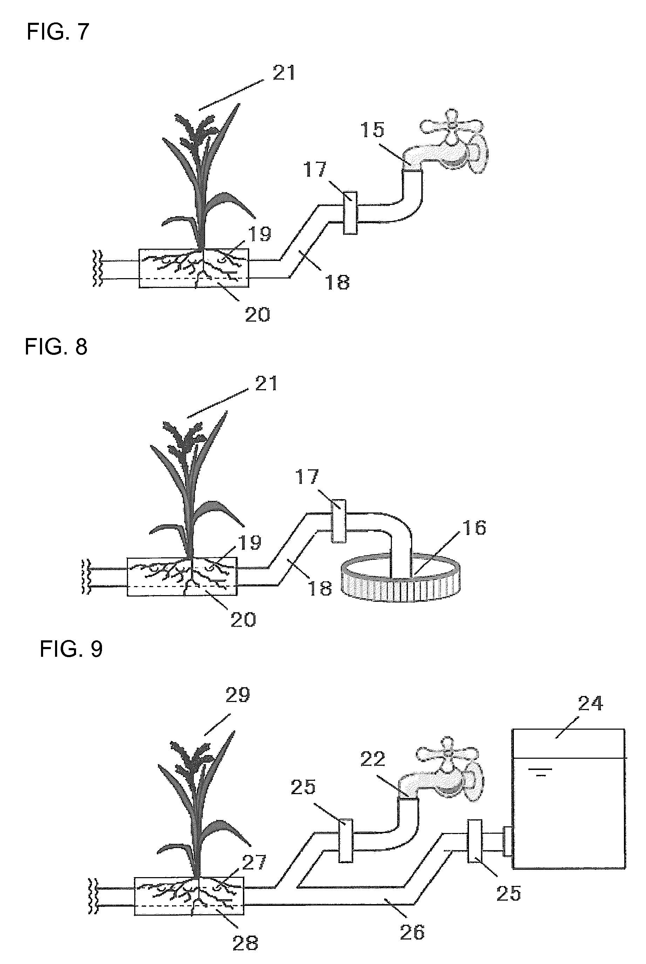

[Figure 7] A schematic view of the plant cultivation system of this invention, comprising the plant cultivation materials and the tubing, available to directly be connected to a faucet of tap water supply is shown in Figure 7.
[Figure 8] A schematic view of the plant cultivation system of this invention, comprising the plant cultivation materials and the tubing, available to directly be connected to the equipment to pump up well water and/or groundwater is shown in Figure 8.
[Figure 9] A schematic view of the plant cultivation system of this invention, comprising the plant cultivation materials and the tubing, using a liquid in a liquid-supply tank such as water, a nutrient solution or agrochemical products and tap water at the same time is shown in Figure 9.

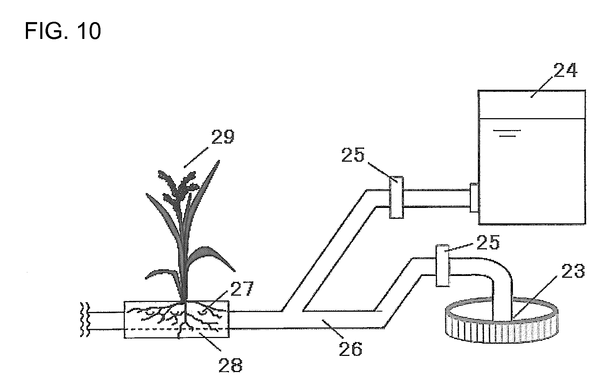

[Figure 10] A schematic view of the plant cultivation system of this invention, comprising the plant cultivation materials and the tubing, using a liquid in a liquid-supply tank such as water, a nutrient solution or agrochemical products and well water and/or groundwater at the same time is shown in Figure 10.

### Description of Embodiments

Hereinafter, this invention will be described in detail.

The present invention provides a plant cultivation system to efficiently supply the plant growth elements to the plant cultivation materials which have a liquid retentivity and a liquid transitivity and which comprise a structure capable to provide the environment suitable for plant respiration in order to supply the amount of the elements as much as plants want whenever plant want, and provides a plant cultivation method using the plant cultivation system and a production method for the plant cultivation system.

The plant cultivation materials used in this invention are preferably the materials comprising only one of the materials or the materials at any given ratio mixed with two or more of the materials which are synthetic pulps produced from polyolefins such as polyethylenes or polypropylenes, natural pulps or polyesters. Examples of the synthetic pulp may include, but are not particularly limited to, those described in the specification of e.g., JP3913421B and JP2007-077519A or manufactured by the method described in e.g., JP53-1260A.

Hereinafter, the terms used in the embodiments of this invention will be described.

### (Plants)

The term "plant(s)" is used herein to mean various plants including, but are not limited to, plants of the *Malveceae* such as cotton, plants of the *Chenopodiaceae* such as sugar beet, plants of the *Brassicaceae* such as rapeseed, cabbage or turnip, plants of the *Poaceae* such as corn, wheat, rice or sorghum, plants of the *Cucurbitaceae* such as cucumber and pumpkin, plants of the *Asteraceae* such as lettuce, safflower or burdock, plants of the *Apiaceae* such as carrot, celery or coriander, plants of the *Euphorbiaceae* such as castor bean or cassava, plants of the *Solanaceae* such as eggplant, tomato or potato, plants of the *Rosaceae* such as strawberry, apple and cerasus jamasakura, plants of the *Fabaceae* such as soybean, plants of the *Rutaceae* such as orange and lemon, plants of the *Convolvulaceae* such as sweet potato, plants of the *Dioscoreaceae* such as Chinese yam and yam, plants of the *Violaceae* such as pansy, plants of the *Zingiberaceae* such as ginger, plants of the *Boraginaceae* such as myositis, plants of the *Papaveraceae* such as corn poppy, plants of the *Lauraceae* such as camphor laurel, plants of the *Mimosaceae* such as silk tree, plants of the *Lamiaceae* such as red shiso, plants of the *Caryophyllaceae* such as dianthus, and plants of the *Ranunculaceae* such as nigella (devil-in-a-bush, nigella sativa).

### (Seed)

The term "seed(s)" is used herein to mean the disseminules produced by the sexual reproduction of spermatophytes, which contain the embryos that are young plants growing from fertilized eggs, and also used to mean the artificial seeds which are the adventive embryo obtained by tissue cultures and embedded with gelatins, resins or something like those.

### (Nursery)

The term "nursery" is used herein to mean the seeds and the plant bodies having roots, stems and leaves, or the fragments of the plant bodies lacking one or two of elements such as roots, stems and/or leaves and able to be regenerated to a complete plant bodies by curing.

### (Cultivation)

The term "cultivation" is used herein to mean to artificially grow plants in any stage from the seeding stage to the maturation stage of the plant growth. For example, it is used to mean to artificially grow plants over the entire or in a partial period from the seeding stage to the maturation stage and in each following stage or in the stages by the combination of two or more of the following stages:
(1) From the seeding stage to the maturation stage;
(2) From nurseries to the maturation stage;
(3) From seeds to nurseries;
(4) From the stage when plants are cultivated in the other places through the nurseries before the desired maturation to the desired maturation stage.
(5) From nurseries to the stage before the desired maturation (Plants are cultivated in the other places after the stage before the desired maturation to the desired maturation stage).

The cultivation until the maturation stage includes the maturation stage in which the desired plant bodies or one of parts of the plant bodies such as fruits, flowers, leaves, buds, branches, stems, roots and bulbs of the plant bodies are at least made available to be harvested, or in which seeds or nurseries are made available to be harvested from the plant bodies.

### (Cultivation environment)

The term "cultivation environment" is used herein to mean the environment suitable for plant growth or accelerating plant growth.

### (Germination)

The term "germination" is used herein to mean that leaves, stems and/or roots are growing from the inside or the surface of seeds, bulblets or bulb.

### (Acceleration)

The term "acceleration" is used herein to mean the superior plant growth to those by conventional technologies, for example, faster growing, higher germination rate, higher survival rate, larger amount of plant bodies, higher crop yield, higher quality such as higher sugar content.

### (Elements necessary for plant growth)

The phrase "elements necessary for plant growth" is used herein to mean the elements essential for plant growth such as water, fertilizers and air, and the elements required to control insects and/or diseases harmful to the plant growth such as agrochemical products. But the elements are not limited thereto.

### (Absorbing as much as plants want whenever plants want)

The phrase "absorbing as much as plants want whenever plants want" is used herein to mean that plants absorb the plant growth elements as much as plants want whenever plants want, that is, absorbing the elements depends on the plant themselves, and this means to sufficiently supply the elements to the plants.

### (Liquid retentivity)

The term "liquid retentivity" is used herein to mean the property to retain the liquid containing the plant growth elements in the plant cultivation materials. The preferable retention rate is 30% or more and 95% or less as a liquid content (by weight) in the materials containing the liquid, and the more preferable retention rate is 40% or more and 80% or less.

### (Liquid transitivity)

The term "liquid transitivity" is used herein to mean the property to easily transfer the liquid containing the plant growth elements in the plant cultivation materials. The preferable transfer rate is 0.01 mL/h or more per 1 cm³ of the materials and more preferable transfer rate is 0.1 mL/h or more per 1 cm³ of the materials.

### (Fertilizer)

The term "fertilizer(s)" is used herein to mean the nutrients essential for the plant growth, and used to mean the nutrients containing at least one of three fertilizer elements consisting of nitrogen, phosphoric acid and potassium, and being liquid forms or the liquid prepared by dissolving solid fertilizers in water (including emulsion-forms and suspension-forms), (which is described as a "Nutrient Solution(s)" hereinafter).

The examples of Nutrient Solutions are, but not limited to, nitrogen fertilizers such as ammonium sulfate, ammonium chloride, ammonium nitrate, urea or lime nitrogen, phosphate fertilizers such as superphosphate of lime, double or triple superphosphate of lime or fused phosphate, potash fertilizers such as potassium chloride or potassium sulfate, chemical fertilizers such as mono-fertilizers, a chemical fertilizer and mixed fertilizers, calcareous fertilizers such as burnt lime, slaked lime or calcium carbonate fertilizers, silicate fertilizers such as slag silicate fertilizers, manganese fertilizers such as manganese sulfate fertilizers or slag manganese fertilizers, boric acid fertilizers such as borate fertilizers, trace element composite fertilizers such as fused trace element composite fertilizers, or mixed fertilizers which are the mixtures of the aforementioned fertilizers or the mixtures with the following agrochemical products. One, or two or more selected from the aforementioned fertilizers can be used as the ingredient(s) of Nutrient Solutions as desired.

### (Agrochemical product)

The term "agrochemical product(s)" is used herein to mean the agent required to control insects and/or diseases harmful to plant growth, and used to mean the liquid forms or the liquid prepared by dissolving solid agrochemical products in water (including emulsion-forms and suspension-forms).

The agrochemical products include insecticides, acaricides, nematicides, fungicides, herbicides and plant growth regulators, which types are single formulated products and mixed formulated products. The single formulated products mean the agrochemical products containing a single active ingredient and the mixed formulated products mean the agrochemical products arbitrarily mixed with two or more active ingredients of the following insecticides, acaricides, nematicides, fungicides and herbicides, but are not limited to.

The examples of the active ingredients of insecticides, acaricides or nematicides are, but not limited to, organophosphates such as acephate or fenitrothion, carbamates such as methomyl or benfuracarb, pyrazoles such as fipronil, neonicotinoids such as imidacloprid or dinotefuran, natural products such as milbemectin or spinosad, or the other active ingredients of insecticides, acaricides or nematicides having systemic or water soluble properties such as chlorantraniliprole and cyantraniliprole.

The examples of the active ingredients of fungicides are, but not limited to, carbamates such as thiuram or mancozeb, strobilurins such as azoxystrobin or kresoxim-methyl, azoles such as triflumizole, tebuconazole or simeconazole, natural products such as kasugamycin or streptomycin, or the other active ingredients of fungicides having systemic or water soluble properties.

The examples of the active ingredients of herbicides or plant growth regulators are, but not limited to, phosphates such as glyphosate or glufosinate; sulfonylureas such as thifensulfuron methyl, inorganics such as ammonium nitrate and ammonium sulfate, triketones such as sulcotrione or mesotrione, pyrazolates such as pyrazolate or pyrasulfotole, triazolones such as sulfentrazone or amicarbazone, isoxazoles such as isoxachlortole, natural products such as cytokinin and gibberellin, or the other active ingredients of herbicides or plant growth regulators having systemic or water soluble properties. Additionally, the term "systemic property" is used herein to mean the property that the agrochemical products are absorbed from the roots, stems or leaves of the plants and then transferred into the plant bodies.

### (Cavity in the plant cultivation materials)

The term "cavity" in the porous plant cultivation materials is used herein to mean the space through which a liquid containing the plant growth elements is transferred in the plant cultivation materials, whose size is small enough for seeds not to fall down, and which has the liquid transitivity caused by surface tension and capillary action inside of the cavity. In particular, it is preferable that 10 µmφ or less of cavity occupy 50% or more (relative to volume) of the total cavities existing in the materials, and it is more preferable that 10 µmφ or less of cavities occupy 90% or more (relative to volume) of the total cavities existing in the materials.

### (Control of the root growth)

The phrase "control of the root growth" is used herein to mean the method to allow the plant roots to grow in a state suitable for the plant growth inside or outside of the plant cultivation materials and to create the environment of the roots by which plants can absorb the plant growth elements as much as plants want whenever plant want. This is caused by the layered structure of the materials.

### (Layered structure of the plant cultivation materials)

The phrase "layered structure of the plant cultivation materials" is used herein to mean a three-dimensional structure formed by laminating a planar structure on the other planar structure(s) in a layer thickness direction (a direction that intersects to a planar structure consisting of each layer), wherein, the planer structures are formed by continuously or discontinuously intertwining the materials consisting the plant cultivation materials in a two-dimensional manner. The preferable thickness of each layer is 0.01 mm or more and 50 mm or less, and the more preferable thickness is 0.1 mm or more and 10 mm or less. The preferable number of layers is two or more (plural layers). The preferable thickness of the materials as a whole is 5,000 m or less, and more preferable thickness is 500 m or less.

### (Plant cultivation method)

According to the plant cultivation method using the plant cultivation system of this invention, plants can be cultivated over any given stages ranging from seeding up to the maturation stage using a plant cultivation materials that can supply to plants the elements necessary for the plant growth. Such any given stages ranging from seeding up to the maturation stage are as defined in the aforesection "Cultivation".

The shape and size of the plant cultivation materials and the plant cultivation system of this invention are not particularly limited, but can be appropriately selected on the plant growth to keep the plant growth direction and the roots swelling better until the maturation stage of the target plants. For example, the plant cultivation materials can be used in various shapes such as sheet-form, mat-form, cube-form and/or cuboid-form, polygonal-form such as triangle pole-form and column-form, at least to ensure the surface of the plant cultivation materials for seeding and the parts of the materials for the root growth.

### (The materials to efficiently supply the plant growth elements to the plant cultivation materials)

The materials to efficiently supply the plant growth elements to the plant cultivation materials mean the materials that can sufficiently and promptly supply the plant growth elements to the plant cultivation materials, from which the amount of the elements was reduced by absorption by the plants in the growth stage of the cultivated plants up to the maturation stage. The shape and size of the materials and the connection manners between the materials and the plant cultivation materials are not particularly limited.

The materials comprise several members to supply the plant growth elements to the plant cultivation materials. These members, for example, include a channel to supply the plant growth elements to the plant cultivation materials, a channel to recover the plant growth elements passed though the plant cultivation materials or the residues generated by plant consuming at least a part of the plant growth elements, a channel to circulate the plant growth elements to supply to the plant cultivation materials, a joint part to connect or branch these channels; a switching system to open or close these channels and to switch the flow of the plant growth elements at the branch points, a container or a tank for storage of the plant growth elements, or a filtering system to prevent the insoluble materials such as dusts included in the plant growth elements moving through the channels from flowing into the connection points between the plant cultivation materials and the channels. These channels comprise one or more members such as a furrow member opened with no lid or closed with a lid, or pipes. The joints having various structures can be used to connect or branch the pipes.

The plant growth element supply system and the plant cultivation equipment, for example, comprise such kinds of the materials.

The plant growth element supply system means the system to supply the plant growth elements to the plant cultivation materials set on/in the members for the plant cultivation materials to be set on/in. Moreover, the plant growth element supply system, for example, comprise the reservoir for storage of the plant growth elements and the several components to transfer the plant growth elements from the reservoir to the members for the plant cultivation materials to be set on/in via a channel. And moreover, the plant growth elements themselves are recognized as one of the plant growth element supply system.

The plant cultivation equipment means the equipment comprising the members for the plant cultivation materials to be set on/in and to supply the plant growth elements to the plant cultivation materials set on/in the members for the plant cultivation materials to be set on/in. The plant cultivation equipment, for example, comprises a channel to supply the plant growth elements to the plant cultivation materials set on/in the members for the plant cultivation materials to be set on/in and a container for storage of the plant growth elements supplied to the plant cultivation materials through the channel. For transferring the plant growth elements in the channel, gravity transfer generated by height difference or pressurized transfer generated by transfer-pressure generators such as a pump can be used.

The plant cultivation equipment, for example, means the equipment to transfer the plant growth elements through the aforementioned channel, the equipment to supply the plant growth elements to the connection points of the plant cultivation materials set on/in the members for the plant cultivation materials to be set on/in and the equipment to transfer the plant growth elements from the aforementioned connection points or to transfer the residues generated by plant consuming at least a part of the plant growth elements from the aforementioned connection points. In case the plant growth elements are liquid, several kinds of supply pumps for a liquid transfer can be used in combination with channel members such as pipes, as the members of the aforementioned equipment.

The members for the plant cultivation materials to be set on/in have the plant growth element supply portions from which the plant growth elements are supplied to the plant cultivation materials by contact of the plant growth elements in the channel with the plant cultivation materials. In case a pipe is used as the aforementioned channel, the contact surface between the pipe and the plant cultivation materials is the outer surface of the pipe, and by one or more path-through slots from inside of the pipe to the surface of the pipe being prepared on this contact surface, the supply hole from which the plant growth elements are supplied to the plant cultivation materials set on the pipe can be prepared as the plant growth element supply portions.

The members for the plant cultivation materials to be set on/in can have a structure making the plant cultivation materials to which cultivated plants are attached replaceable to new one. Otherwise, the members can have a structure replaceable with the plant cultivation materials to which cultivated plants are attached to new members on/in which new materials of the plant cultivation materials were set.

The plant cultivation system, for example, comprises the aforementioned plant cultivation equipment, the seed-nursery integrated plant cultivation materials prepared by at least one kind of seed or nursery of the plants to be cultivated on the plant cultivation materials being included in or attached to the plant cultivation materials to be integrated, and the plant growth elements.

Hereinafter, the overview of the materials, equipment and system for plant cultivation according to this invention, and the plant cultivation method using these materials, equipment and system will be described with reference to the drawings in a case the plant growth elements comprise a plant growth liquid containing at least water. Furthermore, the plant growth liquid contains at least one of water, nutrient solution or agrochemical products.

For example, as schematically shown in Figure 1, the lower portion of Plant Cultivation Material 2 is partially soaked in the plant growth liquid in Container 1 and seeds or nurseries are put on the upper surface of the Plant Cultivation Material 2 exposed in the air to make Plant 3 growing. Examples of the materials of which Container 1 is made, but are not particularly limited to, are polyolefins such as polyethylene or polypropylene, resins such as silicon, Teflon (registered trade mark), metallic materials such as stainless steel, burned materials such as glass or ceramics, mortar or concrete. The patterned indented structure, dents or holes for seeding can be laid on the seeding surface of the Material 2.

As shown in Figure 2 [Figure 2(a): front view, Figure 2(b): side view, Figure 2(c): side view showing the supply portions for the plant growth liquid, Figure 2(d): side view showing the structure of the detachable members for the plant cultivation materials to be set on, Figure 2(e): side view showing the structure of the detachable members for the plant cultivation materials to be set on], the surface of Tubing 5 having Liquid Supply Hole 6 to supply the plant growth liquid to Plant Cultivation Material 7 is covered with the Material(s) 7, the Tubing(s) 5 covered with the Material(s) 7 is used or are connected each other to prepare the crop cultivation tubing, the both ends of the tubing are closed by the valves 4, the plant growth liquid is added into the crop cultivation tubing by one of the valves 4 at the both ends of the tubing being opened, and seeds or nurseries are put on the surface of the Material 7 to make Plant 8 growing. The Member 6a for the Material 7 to be set on comprises the Hole 6 to supply the plant growth elements prepared on the Tubing 5. As the plant cultivation system shown in Figure 2 has the structure that the Material 7 attached with Plant 8 can be removed from the Member 6a after the cultivation of a desired Plant 8 is completed, new Material 7 can be set on the Member 6a for the Material 7 to be set on to start the next cultivation. Otherwise, if the Member 6a on which the Material 7 attached with Plant 8 is set is designed to be detachable as shown in Figure 2(d), the Member 6a on which the Material 7 attached with Plant 8 is set can be wholly removed to obtain the units shown in the Figure 2(e) and then to connect new Member 6a on which new Material 7 is set with the units shown in the Figure 2(e).

Additionally, the plural Members 6a can be tandemly arranged on/in a Tubing 5. Also, the plural of Tubing 5 having one or more the members 6a for the Material(s) 7 to be set on can be arranged in parallel. Moreover, when Plant 8 is harvested at the cultivation site or the system is removed from the site, various removal methods can be employed depending upon the purpose, as described above, such as the method to remove Material 7 attached with Plant 8, the method to wholly remove the Member 6a on which the Material 7 attached with Plant 8 or the method to wholly remove the Tubing 5 and the Material 7.

The valve 4 is not particularly limited as long as it has an open and shut function. The materials of the Tubing 5 are not particularly limited as long as Liquid Supply Holes 6 can be formed, for example, include polyolefins such as polyethylene or polypropylene, resins such as polyvinyl chloride, metallic materials such as stainless steel, burned materials such as glass or ceramics, mortar, concrete, rubber or composite materials of these. Alternatively, the porous tubing having ready-made holes can be used. The diameter of the tubing 5, but is not particularly limited, is preferably 0.01 mmϕ to 1,000 mmϕ and more preferably 0.1 mmϕ to 100 mmϕ. The length of the tubing 5, but is not particularly limited, is preferably 5 cm to 5,000 m, and more preferably 50 cm to 500 m. Although the shape and diameter of the liquid supply hole 6 are not particularly limited, the diameter of the hole is preferably 99% or less of the inner diameter of the Tubing 5 and more preferably 90% or less. A filter to filtrate the materials insoluble in the liquid can be set in Tubing 5 or on Liquid Supply Hole 6. The seeding surface of the Plant Cultivation Materials 7 can have a patterned indented structure such as a ridge, or dents or holes for seeding. The dents or holes for seeding or transplanting can be covered with a water-soluble or a biodegradable film sheet after seeds or nurseries are put in the dents or holes so as not to drop the seeds or the nurseries therefrom.

As shown in Figures 3 to 6 [(a) of each figure: front view, (b) of each figure: side view], a Liquid Supply Tank 9 in which the liquid for plant growth is added is connected to Tubing 11 via Valve 10. The surface of the Tubing 11 having the Liquid Supply Holes 12 is covered with one or plural Plant Cultivation Materials 13, a plant cultivation tubing is prepared by a Tubing 11 covered with the Materials 13 or the plural Tubing 11 covered with the Materials 13 being connected each other, Valve 10 is open to insert the liquid for plant growth to the tubing for plant cultivation from Liquid Supply Tank 9 and seeds and/or nurseries are put on the surface of the Materials 13 to make Plant 14 growing. Examples of the materials of which the Liquid Supply Tank 9 is made include, but not particularly limited to, polyolefins such as polyethylene or polypropylene, resins such as silicon or Teflon, metallic materials such as stainless steel, burned materials such as glass or ceramics, mortar, concrete or composite materials of these. The Valve 10 is not particularly limited as long as it has an open and shut function. Examples of the methods to supply the plant growth elements from the Liquid Supply Tank 9 to the Plant Cultivation Materials 13 via the Tubing 11 include, but not particularly limited to, a method using the atmospheric pressure by opening the top of the Liquid Supply Tank 9, a method of using a pressure pump or a method using a negative pressure difference by keeping the system closed. The materials of the Tubing 11 are not particularly limited as long as Liquid Supply Hole 12 can be formed, for example, include polyolefins such as polyethylene or polypropylene, resins such as polyvinyl chloride, metallic materials such as stainless steel, burned materials such as glass or ceramics, mortar, concrete, rubber or composite materials of these. Alternatively, the porous tubing having ready-made holes can be used. The diameter of the Tubing 11, but is not particularly limited, is preferably 0.01 mmϕ to 1,000 mmϕ and more preferably 0.1 mmϕ to 100 mmϕ. The length of the Tubing 11, but is not particularly limited, is preferably 5 cm to 5,000 m and more preferably 50 cm to 500 m. Although the shape and diameter of the Liquid Supply Hole 12 are not particularly limited, the diameter of the Hole 12 is preferably 99% or less of the inner diameter of the Tubing 11 and more preferably 90% or less. Moreover, a filter to filtrate materials insoluble in the liquid can be set in the Tank 9, in the Tubing 11 or on the Liquid Supply Hole 12. The seeding surface of the Materials 13 can have a patterned indented structure such as a ridge, or dents or holes for seeding. The dents or holes for seeding or transplanting can be covered with a water-soluble or a biodegradable film or paper sheet after seeds or nurseries are put in the dents or holes so as not to drop the seeds or nurseries therefrom.

As shown in Figures 7 and 8, an existing Faucet 15 of tap water supply or an Intake 16 of well water and/or groundwater is connected to a Tubing 18 via a valve 17, the surface of the Tubing 18 having Liquid Supply Hole 19 is covered with the Plant Cultivation Material(s) 20, the Tubing(s) 18 covered with the materials 20 is used or connected each other to prepare the plant cultivation tubing, the Valve 17 is opened to insert water to the cultivation tubing from Faucet 15 of tap water supply or Intake 16 of well water and/or groundwater, and seeds or nurseries are put on the surface of the Materials 20 to make Plant 21 growing. The Valve 17 is not particularly limited as long as it has an open and shut function. The materials of the Tubing 18 are not particularly limited as long as the Liquid Supply Holes 19 can be formed, for example, include polyolefins such as polyethylene or polypropylene, resins such as polyvinyl chloride, metallic materials such as stainless steel, burned materials such as glass or ceramics, mortar, concrete, rubber or composite materials of these. Alternatively, a porous tubing having ready-made holes can be used. The diameter of the tube 18, but is not particularly limited, is preferably 0.01 mmϕ to 1,000 mmϕ and more preferably 0.1 mmϕ to 100 mmϕ. The length of the tubing 18, but is not particularly limited, is preferably 5 cm to 5,000 m and more preferably 50 cm to 500 m. Although the shape and diameter of the Liquid Supply Hole 19 are not particularly limited, the diameter of the Hole is preferably 99% or less of the inner diameter of the Tubing 18 and more preferably 90% or less. Moreover, a filter to filtrate the materials insoluble in the liquid can be set in the Tubing 18 or on the Liquid Supply Hole 19. The seeding surface of the Materials 20 can have a pattern indented structure such as a ridge, or dents or holes for seeding. The dents or holes for seeding or transplanting can be covered with a water-soluble or a biodegradable film or paper sheet after seeds or nurseries are put in the dents or holes so as not to drop the seeds or nurseries therefrom.

As shown in Figure 1, Plant 3 grows in the layer thickness direction (in the vertical direction to the each layer) in case the Plant Cultivation Material 2 has a layered structure, on the other hand, as the steady rooting condition can be ensured for Plant 3 by roots not only growing in the layer thickness direction of the layered structure but also effectively growing in the horizontal direction (in the direction along the planar structure of each layer), Plant 3 can absorb the plant growth elements necessary for the growth as much as plant 3 wants whenever plant 3 wants. Moreover, as the amount of the liquid reduced by Plant 3 absorbing in the Material 2 is promptly supplied to the Material 2 from Container 1, the Material 2 can be made a stable cultivation environment.

As shown in Figure 2, Plant 8 grows in the layer thickness direction from inside to outside the cylindrically processed Plant Cultivation Material 7 in case the Material 7 processed into a cylindrical form is used, on the other hand, as the steady rooting condition can be ensured for Plant 8 by roots not only growing in the layer thickness direction of the layered structure but also effectively growing in the horizontal direction (in the direction along each layer), Plant 8 can absorb the plant growth elements necessary for the growth as much as plant 8 wants whenever plant 8 wants. Moreover, as the amount of the liquid reduced by Plant 8 absorbing in the Material 7 is promptly supplied to the Material 7 from Tubing 5, the Material 7 can be made a stable cultivation environment.

As shown in Figure 3, Plant 14 grows in the layer thickness direction from inside to outside the cylindrically processed Plant Cultivation Material 13 in case the Material 13 processed into a cylindrical form is used, on the other hand, as the steady rooting condition can be ensured for Plant 14 by roots not only growing in the layer thickness direction of the layered structure but also effectively growing in the horizontal direction (in the direction along each layer), Plant 14 can absorb the plant growth elements necessary for the growth as much as plant 14 wants whenever plant 14 wants. Moreover, as the amount of the liquid reduced by Plant 14 absorbing in the Material 13 is promptly supplied to the Material 13 from Liquid Supply Tank 9 through Tubing 11, the Material 13 can be made a stable cultivation environment.

As shown in Figure 4, Plant 14 grows in the layer thickness direction of the layered structure included in the sheet-formed Plant Cultivation Material 13 having a layered structure in case the Materials 13 and the Tubing 11 sandwiched by the Materials 13 are used, on the other hand, as the steady rooting condition can be ensured for Plant 14 by roots not only growing in the layer thickness direction of the layered structure but also effectively growing in the horizontal direction (in the direction along each layer), Plant 14 can absorb the plant growth elements necessary for the growth as much as plant 14 wants whenever plant 14 wants. Moreover, as the amount of the liquid reduced by Plant 14 absorbing in the Material 13 is promptly supplied to the Material 13 from Liquid Supply Tank 9 through Tubing 11 by the Material 13 being firmly attached to the Liquid Supply Hole 12, the Material 13 can be made a stable cultivation environment.

As shown in Figure 5, in case the material 13 processed into a triangle pole form is used, as the steady rooting condition can be ensured for Plant 14 by roots growing in the direction along each layer of the Plant Cultivation Material 13 having a triangle pole structure, Plant 14 can absorb the plant growth elements necessary for the growth as much as plant 14 wants whenever plant 14 wants. Moreover, as the amount of the liquid reduced by Plant 14 absorbing in the Material 13 is promptly supplied to the Material 13 from Liquid Supply Tank 9 through Tubing 11 by the Material 13 being firmly attached to the Liquid Supply Hole 12, the Material 13 can be made a stable cultivation environment.

As shown in Figure 6, in case the material 13 processed into a cuboid form is used, Plant 14 grows in the layer thickness direction or in the horizontal direction of the cuboid-formed Plant Cultivation Material 13, on the other hand, as the steady rooting condition can be ensured for Plant 14 by roots growing in the horizontal direction (in the direction along each layer) or in the layer thickness direction, Plant 14 can absorb the plant growth elements necessary for the growth as much as plant 14 wants whenever plant 14 wants. Moreover, as the amount of the liquid reduced by Plant 14 absorbing in the Material 13 is promptly supplied to the Material 13 from Liquid Supply Tank 9 through Tubing 11 by the Material 13 being firmly attached to the Liquid Supply Hole 12, the Material 13 can be made a stable cultivation environment.

As shown in Figures 7 and 8, in case Tubing 18 is directly connected to a faucet 15 of water supply or an intake 16 of well water and/or groundwater, as water which is one of the plant growth elements necessary for plant growth can be promptly supplied to the Plant Cultivation Material 20 through Tubing 18, Plant 21 can absorb water as much as Plant 21 wants whenever Plant 21 wants. Moreover, as the plant growth elements are promptly supplied to the Plant Cultivation Material 28 through Tubing 26 by tap water supply, well water or groundwater being used independently or in connection with Liquid Supply Tank 24 in which the liquid including the plant growth elements is added as shown in Figure 9 and 10, the Material 28 can be made a stable cultivation environment.

The relationship between the layer thickness direction in the layered structure of the plant cultivation materials and the plant growth direction is not limited to those shown in Figures 1 to 6, and can be controlled as appropriate so that the cultivation condition suitable for plant growth can be obtained. Furthermore, as required, the supports for plants or the guides to support the plant growth directions can be used, the supporting structure to fix the Material 2 in the Container 1 can be used, the fixing property of the Material 7 on Tubing 5 or the Material 13 on Tubing 11 can be enhanced, or adhesive materials can be used. Moreover, the positional relationship between Liquid Supply Hole 6 or 12 and Tubing 5 or 11, respectively, is not particularly limited and can be controlled to obtain the cultivation condition suitable for plant growth as long as Materials 7 or 13 is firmly attached to Liquid Supply Hole 6 or 12, respectively.

The places for plant cultivation using the plant cultivation system of this invention can be appropriately selected depending on the purpose of plant cultivation, for example, in natural environments such as in open-field culture, cultivation chambers, houses or cultivation facilities in which the cultivation conditions such as temperature and/or humidity can be controlled.

### Working Examples

This invention will be specifically described by the following working examples. But these examples are not intended to limit the scope of this invention.

### (Example 1)

Synthetic pulps (SWP (registered trademark): E400, manufactured by Mitsui Chemicals, Inc.) pressed into the sheet form which was 5 mm thick were stacked so as to be firmly attached each other to prepare a cuboid with a size of 80 mm × 100 mm × 65 mm (in height). The cuboid was then floated on the liquid surface of water poured into a cultivation case to allow water to penetrate into the synthetic pulps from the lower parts of the synthetic pulps. Wheat seeds were put on the upper surface of the synthetic pulps in order to observe the growth of wheat under the following conditions: an ambient temperature of 21 ± 3°C, a humidity of 55 ± 15%, an illuminance of 12,000 lux for 9.5 hours per day. The result of the growth is shown in Table 1.
[Table 1]

**Table 1 Result of Wheat Growth (seeded on January 6, 2012)**

| | | | | | | | | |
|---|---|---|---|---|---|---|---|---|
| Days after Seeding (days) | 3 | 6 | 9 | 13 | 14 | 21 | 27 | 30 |
| Height of Plants (mm) | Germination | 40 | 60 | 147 | 188 | 237 | 275 | 285 |
| Number of Leaves (pieces) | | 1 | 1 | 2 | 3 | 3 | 4 | 4 |
| Days after Seeding (days) | 35 | 37 | 41 | 43 | 51 | 63 | 69 | 72 |
| Height of Plants (mm) | 293 | 294 | 290 | 299 | 299 | 310 | 345 | 365 |
| Number of Leaves (pieces) | 5 | 5 | 5 | 5 | 7 | 7 | 7 | 7 |

### (Example 2)

Synthetic pulps (SWP (registered trademark): E400, manufactured by Mitsui Chemicals, Inc.) pressed into the sheet form which was 5 mm thick were stacked so as to be firmly attached each other to prepare a cuboid with a size of 80 mm × 100 mm × 65 mm (in height). The cuboid was then floated on the liquid surface of a nutrient solution (the composition is shown in Table 2) poured into a cultivation case to allow the nutrient solution to penetrate into the synthetic pulps from the lower parts of the synthetic pulps. Wheat seeds were put on the upper surface of the synthetic pulps in order to observe the growth of wheat under the following conditions: an ambient temperature of 21 ± 3°C, a humidity of 55 ± 15%, an illuminance of 12,000 lux for 9.5 hours per day. The results of the growth and the nutrient solution consumption are shown in Table 3.
[Table 2]

**Table 2 Composition of Nutrient Solution**

| Ingredient of Nutrient Solution | Concentration (mg/l) | Ingredient of Nutrient Solution | Concentration (mg/l) |
|---|---|---|---|
| Ca(NO₃)₂·4H₂O | 472 | ZnSO₄·7H₂O | 0.22 |
| KNO₃ | 808 | CuSO₄·5H₂O | 0.08 |
| NH₄H₂PO₄ | 152 | Na₂MoO₄·2H₂O | 0.025 |
| MgSO₄·7H₂O | 492 | MnSO₄.5H₂O | 2.38 |
| H₃BO₃ | 2.86 | Fe-EDTA | 22.6 |

[Table 3]

**Table 3 Results of Wheat Growth and Nutrient Solution Consumption (seeded on November 15, 2011)**

| Days after Seeding (days) | 2 | 3 | 6 | 9 | 13 | 14 | 21 | 23 |
|---|---|---|---|---|---|---|---|---|
| Height of Plants (mm) | | 5 | 45 | 120 | 165 | 200 | 280 | 290 |
| Number of Leaves (pieces) | | 1 | 1 | 2 | 3 | 3 | 5 | 6 |
| Growth Stage | Germination | | | | | | | |
| Integrated Nutrient Solution Consumption (mL) | | | | | | | 28 | |
| Days after Seeding (days) | 27 | 30 | 35 | 37 | 41 | 43 | 51 | 56 |
| Height of Plants (mm) | 330 | 335 | 390 | 405 | 419 | 428 | 450 | 450 |
| Number of Leaves (pieces) | 9 | 10 | 12 | 12 | 12 | 16 | 19 | 19 |
| Growth Stage | Tillering | | | | | | | Booting |
| Integrated Nutrient Solution Consumption (mL) | 72 | | 128 | | 184 | 234 | 289 | 333 |
| Days after Seeding (days) | 58 | 59 | 63 | 66 | 69 | 72 | 79 | 83 |
| Height of Plants (mm) | 452 | 465 | 470 | 518 | 520 | 558 | 600 | 635 |
| Number of Leaves (pieces) | 19 | 19 | 19 | 22 | 22 | 22 | 22 | 22 |
| Growth Stage | | | | | | | | |
| Integrated Nutrient Solution Consumption (mL) | | 377 | 432 | 471 | 527 | 555 | 599 | 677 |
| Days after Seeding (days) | 86 | 90 | 93 | | | | | |
| Height of Plants (mm) | 638 | 638 | 661 | | | | | |
| Number of Leaves (pieces) | 23 | 23 | 23 | | | | | |
| Growth Stage | Ear Emergence | | | | | | | |
| Integrated Nutrient Solution Consumption (mL) | 744 | 800 | | | | | | |

### (Example 3)

Synthetic pulps (SWP (registered trademark): E400, manufactured by Mitsui Chemicals, Inc.) pressed into the sheet form which was 5 mm thick were stacked so as to be firmly attached each other to prepare a cuboid with a size of 300 mm × 360 mm × 100 mm (in height). The cuboid was then floated on the liquid surface of a nutrient solution (the composition is shown in Table 4) poured into a cultivation case to allow the nutrient solution to penetrate into the synthetic pulps from the lower parts of the synthetic pulps. Grape tomato seeds were put on the upper surface of the synthetic pulps in order to observe the growth of grape tomato under the following conditions: an ambient temperature of 21 ± 3°C, a humidity of 55 ± 15%, an illuminance of 12,000 lux for 9.5 hours per day, and to measure the sugar content of fruitive grape tomato pulp by a hand-held refractometer IATC-1 E (Brix 0 to 32%) manufactured by luchi Seieido Co., Ltd. The results of the growth and the sugar content are shown in Table 5.
[Table 4]

**Table 4 Composition of Nutrient Solution**

| Ingredient of Nutrient Solution | Concentration (mg/l) | Ingredient of Nutrient Solution | Concentration (mg/l) |
|---|---|---|---|
| Ca(NO₃)₂·4H₂O | 354 | ZnSO₄·7H₂O | 0.22 |
| KNO₃ | 404 | CuSO₄·5H₂O | 0.08 |
| NH₄H₂PO₄ | 76 | Na₂MoO₄·2H₂O | 0.025 |
| MgSO₄·7H₂O | 246 | MnSO₄·5H₂O | 2.38 |
| H₃BO₃ | 2.86 | Fe-EDTA | 22.6 |

[Table 5]

**Table 5 Results of Grape Tomato Growth and Sugar Content (seeded on April 13, 2012)**

| | | | | | | | | |
|---|---|---|---|---|---|---|---|---|
| Days after Seeding (days) | 5 | 18 | 28 | 32 | 52 | 60 | 69 | 76 |
| Height of Plants (mm) | Germination | 30 | 55 | 72 | 215 | 355 | 480 | 640 |
| Number of Flower Buds (pieces) | | | | | 3 | 12 | 14 | 47 |
| Number of Fruit-Setting (pieces) | | | | | | | | 1 |
| Days after Seeding (days) | 84 | 87 | 90 | 98 | 108 | 119 | 132 | 167 |
| Height of Plants (mm) | 830 | 860 | 1,000 | 1,270 | 1,500 | 1,800 | 2,250 | |
| Number of Flower Buds (pieces) | 93 | 94 | 114 | 185 | 166 | 155 | 142 | |
| Number of Fruit-Setting (pieces) | 7 | 7 | 11 | 24 | 56 | 131 | 199 | |
| Sugar Content (Brix, %) | | | | | | | | 14.0 |

### (Examples 4 to 14)

Leaf lettuce, rapeseed, myosotis, corn poppy, prunus sargentii, camphor laurel, silk tree, nigella (Nigella damascena), coriander, soybean and red perilla were seeded in the same manner as in Example 2 in order to observe each growth. The results of each of the growth and the nutrient solution consumption during are shown in Tables 6 to 16.
[[Table 6]

**Table 6 Results of Leaf-lettuce Growth and Nutrient Solution Consumption (seeded on November 15, 2011)**

| | | | | | | | | |
|---|---|---|---|---|---|---|---|---|
| Days after Seeding (days) | 2 | 3 | 6 | 9 | 13 | 14 | 21 | 23 |
| Height of Plants (mm) | Germination | 5 | 5 | 8 | 20 | 27 | 45 | 53 |
| Number of Leaves (pieces) | | 2 | 3 | 3 | 4 | 4 | 5 | 6 |
| Integrated Nutrient Solution Consumption (mL) | | | | | | | | |
| Days after Seeding (days) | 27 | 30 | 35 | 41 | 43 | 51 | 56 | 58 |
| Height of Plants (mm) | 70 | 80 | 110 | 139 | 152 | 190 | 200 | 212 |
| Number of Leaves (pieces) | 7 | 7 | 8 | 9 | 11 | 12 | 13 | 13 |
| Integrated Nutrient Solution Consumption (mL) | | | | 60 | 80 | 140 | 220 | |
| Days after Seeding (days) | 59 | 63 | 66 | 69 | 72 | 79 | 83 | 86 |
| Height of Plants (mm) | 220 | 220 | 235 | 239 | 249 | 252 | 268 | 268 |
| Number of Leaves (pieces) | 13 | 15 | 15 | 15 | 15 | 16 | 16 | 16 |
| Integrated Nutrient Solution Consumption (mL) | 260 | 320 | 400 | 480 | 530 | 590 | 690 | 740 |
| Days after Seeding (days) | 90 | 93 | | | | | | |
| Height of Plants (mm) | 268 | 268 | | | | | | |
| Number of Leaves (pieces) | 16 | 16 | | | | | | |
| Integrated Nutrient Solution Consumption (mL) | 860 | | | | | | | |

[Table 7]

**Table 7 Results of Rapeseed Growth and Nutrient Solution Consumption (seeded on November 15, 2011)**

| | | | | | | | | |
|---|---|---|---|---|---|---|---|---|
| Days after Seeding (days) | 2 | 3 | 6 | 9 | 13 | 14 | 21 | 23 |
| Height of Plants (mm) | Germination | 10 | 17 | 20 | 30 | 33 | 60 | 65 |
| Number of Leaves (pieces) | | 2 | 2 | 3 | 4 | 4 | 5 | 5 |
| Integrated Nutrient Solution Consumption (mL) | | | | | | | | |
| Days after Seeding (days) | 27 | 30 | 35 | 41 | 43 | 51 | 56 | 58 |
| Height of Plants (mm) | 78 | 84 | 110 | 141 | 156 | 215 | 245 | 250 |
| Number of Leaves (pieces) | 6 | 6 | 7 | 9 | 10 | 11 | 11 | 11 |
| Integrated Nutrient Solution Consumption (mL) | | | | 67 | | 109 | 159 | |
| Days after Seeding (days) | 59 | 63 | 66 | 69 | 72 | 79 | 83 | 86 |
| Height of Plants (mm) | 250 | 254 | 285 | 315 | 329 | 360 | 366 | 367 |
| Number of Leaves (pieces) | 11 | 13 | 13 | 13 | 13 | 16 | 16 | 16 |
| Integrated Nutrient Solution Consumption (mL) | 192 | 225 | 275 | 325 | 375 | 425 | 542 | 592 |
| Days after Seeding (days) | 90 | | | | | | | |
| Height of Plants (mm) | 367 | | | | | | | |
| Number of Leaves (pieces) | 16 | | | | | | | |
| Integrated Nutrient Solution Consumption (mL) | 717 | | | | | | | |

[Table 8]

**Table 8 Results of Myosotis Growth and Nutrient Solution Consumption (seeded on November 15, 2011)**

| | | | | | | | | |
|---|---|---|---|---|---|---|---|---|
| Days after Seeding (days) | 3 | 6 | 9 | 13 | 14 | 21 | 23 | 27 |
| Height of Plants (mm) | Germination | 5 | 6 | 15 | 17 | 32 | 40 | 56 |
| Number of Leaves (pieces) | | 2 | 2 | 4 | 4 | 6 | 6 | 7 |
| Integrated Nutrient Solution Consumption (mL) | | | | | | | | |
| Days after Seeding (days) | 30 | 35 | 41 | 43 | 51 | 56 | 58 | 59 |
| Height of Plants (mm) | 62 | 83 | 107 | 115 | 145 | 155 | 155 | 159 |
| Number of Leaves (pieces) | 7 | 10 | 10 | 18 | 19 | 19 | 22 | 24 |
| Integrated Nutrient Solution Consumption (mL) | | | 31 | 44 | 60 | 98 | | |
| Days after Seeding (days) | 63 | 66 | 69 | 72 | 79 | 83 | 86 | 90 |
| Height of Plants (mm) | 161 | 163 | 163 | 168 | 173 | 180 | 180 | 180 |
| Number of Leaves (pieces) | 27 | 27 | 27 | 34 | 34 | 34 | 34 | 34 |
| Integrated Nutrient Solution Consumption (mL) | 136 | | 180 | 205 | 255 | 293 | 324 | 362 |
| Days after Seeding (days) | 93 | | | | | | | |
| Height of Plants (mm) | 180 | | | | | | | |
| Number of Leaves (pieces) | 34 | | | | | | | |
| Integrated Nutrient Solution Consumption (mL) | | | | | | | | |

[Table 9]

**Table 9 Results of Corn Poppy Growth and Nutrient Solution Consumption (seeded on November 15, 2011)**

| | | | | | | | | |
|---|---|---|---|---|---|---|---|---|
| Days after Seeding (days) | 2 | 3 | 6 | 9 | 13 | 14 | 21 | 23 |
| Height of Plants (mm) | Germination | 3 | 8 | 10 | 10 | 12 | 22 | 29 |
| Number of Leaves (pieces) | | 2 | 2 | 4 | 4 | 6 | 9 | 9 |
| Integrated Nutrient Solution Consumption (mL) | | | | | | | | |
| Days after Seeding (days) | 27 | 30 | 35 | 41 | 43 | 51 | 56 | 58 |
| Height of Plants (mm) | 38 | 49 | 74 | 95 | 103 | 144 | 160 | 165 |
| Number of Leaves (pieces) | 10 | 13 | 17 | 17 | 18 | 21 | 24 | 26 |
| Integrated Nutrient Solution Consumption (mL) | | | | 100 | | 200 | 250 | |
| Days after Seeding (days) | 59 | 63 | 66 | 69 | 72 | 79 | 83 | 86 |
| Height of Plants (mm) | 165 | 165 | 178 | 189 | 190 | 207 | 207 | 212 |
| Number of Leaves (pieces) | 26 | 26 | 26 | 26 | 31 | 31 | 31 | 31 |
| Integrated Nutrient Solution Consumption (mL) | | 400 | | 550 | 650 | 875 | 1,000 | 1,150 |
| Days after Seeding (days) | 90 | 93 | | | | | | |
| Height of Plants (mm) | 224 | 248 | | | | | | |
| Number of Leaves (pieces) | 31 | 31 | | | | | | |
| Integrated Nutrient Solution Consumption (mL) | 1,300 | | | | | | | |

[Table 10]

**Table 10 Results of Prunus Sargentii Growth and Nutrient Solution Consumption (seeded on November 15, 2011)**

| Days after Seeding (days) | 1 | 6 | 9 | 13 | 14 | 21 | 23 | 27 |
|---|---|---|---|---|---|---|---|---|
| Length of Plant (mm) | Germination | 15 | 43 | 80 | 95 | 119 | 130 | 132 |
| Number of Leaves Developed (pieces) | | 2 | 5 | 6 | 6 | 7 | 8 | 9 |
| Integrated Nutrient Solution Consumption (mL) | | | | | | 40 | | 80 |
| Days after Seeding (days) | 30 | 35 | 41 | 43 | 51 | 56 | 58 | 59 |
| Height of Plants (mm) | 138 | 162 | 190 | 205 | 242 | 256 | 268 | 276 |
| Number of Leaves (pieces) | 9 | 11 | 12 | 12 | 14 | 16 | 16 | 16 |
| Integrated Nutrient Solution Consumption (mL) | | | 140 | 160 | 200 | 240 | | |
| Days after Seeding (days) | 63 | 66 | 69 | 72 | 79 | 83 | 86 | 90 |
| Height of Plants (mm) | 295 | 310 | 323 | 340 | 372 | 390 | 390 | 390 |
| Number of Leaves (pieces) | 17 | 17 | 17 | 19 | 19 | 19 | 19 | 19 |
| Integrated Nutrient Solution Consumption (mL) | 290 | 330 | 370 | 420 | 450 | 500 | 550 | 620 |
| Days after Seeding (days) | 93 | | | | | | | |
| Height of Plants (mm) | 419 | | | | | | | |
| Number of Leaves (pieces) | 19 | | | | | | | |
| Integrated Nutrient Solution Consumption (mL) | | | | | | | | |

[Table 11]

**Table 11 Result of Camphor Laurel Growth (seeded on November 15, 2011)**

| | | | | | | | | |
|---|---|---|---|---|---|---|---|---|
| Days after Seeding (days) | 1 | 2 | 3 | 6 | 9 | 13 | 14 | 21 |
| Height of Plants (mm) | Germination | 20 | 22 | 30 | 30 | 30 | 30 | 32 |
| Number of Leaves (pieces) | | 1 | 1 | 1 | 1 | 2 | 3 | 4 |
| Days after Seeding (days) | 23 | 27 | 30 | 35 | 41 | 43 | 51 | 56 |
| Height of Plants (mm) | 32 | 32 | 32 | 32 | 32 | 32 | 32 | 32 |
| Number of Leaves (pieces) | 4 | 4 | 4 | 4 | 4 | 4 | 4 | 4 |
| Days after Seeding (days) | 58 | 59 | 63 | 66 | 69 | 72 | 79 | 83 |
| Height of Plants (mm) | 32 | 33 | 33 | 33 | 33 | 33 | 33 | 33 |
| Number of Leaves (pieces) | 4 | 4 | 4 | 4 | 4 | 4 | 4 | 4 |
| Days after Seeding (days) | 86 | 90 | 93 | | | | | |
| Height of Plants (mm) | 33 | 33 | 33 | | | | | |
| Number of Leaves (pieces) | 4 | 4 | 4 | | | | | |

[Table 12]

**Table 12 Results of Silk Tree Growth and Nutrient Solution Consumption (seeded on November 15, 2011)**

| | | | | | | | | |
|---|---|---|---|---|---|---|---|---|
| Days after Seeding (days) | 3 | 9 | 13 | 14 | 21 | 23 | 27 | 30 |
| Height of Plants (mm) | Germination | 25 | 28 | 45 | 53 | 55 | 55 | 55 |
| Number of Leaves (pieces) | | 4 | 5 | 5 | 6 | 6 | 6 | 6 |
| Integrated Nutrient Solution Consumption (mL) | | | | | 100 | | | |
| Days after Seeding (days) | 35 | 41 | 43 | 51 | 56 | 58 | 59 | 63 |
| Height of Plants (mm) | 55 | 55 | 55 | 55 | 55 | 55 | 55 | 55 |
| Number of Leaves (pieces) | 7 | 7 | 7 | 7 | 7 | 7 | 7 | 7 |
| Integrated Nutrient Solution Consumption (mL) | 250 | | | | | | 500 | |
| Days after Seeding (days) | 66 | 69 | 72 | 79 | 83 | 86 | 90 | 93 |
| Height of Plants (mm) | 55 | 55 | 55 | 55 | 55 | 55 | 55 | 55 |
| Number of Leaves (pieces) | 7 | 8 | 8 | 8 | 8 | 8 | 8 | 8 |
| Integrated Nutrient Solution Consumption (mL) | | | | | 750 | | | |

[Table 13]

**Table 13 Results of Nigella Growth and Nutrient Solution Consumption (seeded on December 13, 2011)**

| | | | | | | | | |
|---|---|---|---|---|---|---|---|---|
| Days after Seeding (days) | 2 | 6 | 13 | 14 | 23 | 27 | 30 | 35 |
| Heightof Plants (mm) | Germination | 10 | 33 | 42 | 47 | 50 | 51 | 51 |
| Number of Leaves (pieces) | | 2 | 2 | 2 | 3 | 3 | 3 | 4 |
| Integrated Nutrient Solution Consumption (mL) | | | | | | 50 | | 138 |
| Days after Seeding (days) | 41 | 43 | 51 | 56 | 58 | 63 | 66 | 69 |
| Height of Plants (mm) | 67 | 75 | 80 | 94 | 97 | 95 | 105 | 109 |
| Number of Leaves (pieces) | 5 | 5 | 6 | 6 | 7 | 7 | 8 | 8 |
| Integrated Nutrient Solution Consumption (mL) | | 176 | | 264 | | | 339 | |

[Table 14]

**Table 14 Results of Coriander Growth and Nutrient Solution Consumption (seeded on December 13, 2011)**

| | | | | | | | | |
|---|---|---|---|---|---|---|---|---|
| Days after Seeding (days) | 6 | 13 | 14 | 23 | 27 | 30 | 35 | 41 |
| Height of Plants (mm) | Germination | 41 | 48 | 50 | 53 | 53 | 57 | 65 |
| Number of Leaves (pieces) | | 2 | 3 | 4 | 5 | 5 | 6 | 7 |
| Integrated Nutrient Solution Consumption (mL) | | | | | 100 | | 275 | |
| Days after Seeding (days) | 43 | 51 | 56 | 58 | 63 | 66 | 69 | |
| Height of Plants (mm) | 77 | 85 | 120 | 132 | 138 | 156 | 161 | |
| Number of Leaves (pieces) | 7 | 10 | 10 | 13 | 14 | 15 | 15 | |
| Integrated Nutrient Solution Consumption (mL) | 350 | | 500 | | | 625 | | |

[Table 15]

**Table 15 Results of Soybean Growth and Nutrient Solution Consumption (seeded on January 6, 2012)**

| | | | | | | | | |
|---|---|---|---|---|---|---|---|---|
| Days after Seeding (days) | 3 | 14 | 23 | 27 | 30 | 35 | 41 | 43 |
| Height of Plants (mm) | Germination | 25 | 67 | 129 | 160 | 168 | 175 | 200 |
| Number of Leaves (pieces) | | 3 | 6 | 7 | 7 | 8 | 10 | 10 |
| Integrated Nutrient Solution Consumption (mL) | | | 75 | 200 | | 325 | 475 | |
| Days after Seeding (days) | 51 | 56 | 59 | 63 | 66 | 69 | 72 | 79 |
| Height of Plants (mm) | 212 | 223 | 223 | 235 | 240 | 240 | 240 | 240 |
| Number of Leaves (pieces) | 22 | 28 | 37 | 38 | 38 | 38 | 38 | 38 |
| Integrated Nutrient Solution Consumption (mL) | 700 | 775 | | 1,025 | 1,225 | 1,325 | 1,475 | 1,625 |

[Table 16]

**Table 16 Result of Red Perilla Growth (seeded on October 1, 2012)**

| | | | | | | | | |
|---|---|---|---|---|---|---|---|---|
| Days after Seeding (days) | 4 | 11 | 18 | 25 | 32 | 38 | 46 | 62 |
| Height of Plants (mm) | Germination | 5 | 7 | 9 | 10 | 20 | 50 | 65 |
| Number of Leaves (pieces) | | 2 | 4 | 4 | 6 | 6 | 8 | 12 |
| Days after Seeding (days) | 68 | 75 | 82 | 91 | 96 | 104 | | |
| Height of Plants (mm) | 80 | 115 | 130 | 160 | 170 | 185 | | |
| Number of Leaves (pieces) | 12 | 12 | 14 | 14 | 14 | 20 | | |

### (Example 15)

Synthetic pulps (SWP (registered trademark): E400, manufactured by Mitsui Chemicals, Inc.) pressed into the sheet form which is 5 mm thick were stacked so as to be firmly attached with each other to prepare a cuboid with a size of 65 mm × 65 mm × 95 mm (in height). The cuboid was then floated on the liquid surface of a nutrient solution (the composition is shown in Table 2) poured into a cultivation case to allow the nutrient solution to penetrate into the synthetic pulps from the lower parts of the synthetic pulps. Dianthus seeds were put on the upper surface of the synthetic pulps in order to observe the growth of dianthus under the following conditions: an ambient temperature of 21 ± 3°C, a humidity of 55 ± 15%, an illuminance of 12,000 lux for 9.5 hours per day. The result of the growth is shown in Table 17.
[Table 17]

**Table 17 Result of Dianthus Growth (seeded on July 29, 2011)**

| | | | | | | | | |
|---|---|---|---|---|---|---|---|---|
| Days after Seeding (days) | 6 | 13 | 21 | 35 | 42 | 49 | 55 | 84 |
| Height of Plants (mm) | Germination | 10 | 45 | 70 | 75 | 80 | 80 | 95 |

### (Example 16)

Synthetic pulps (SWP (registered trademark): E400, manufactured by Mitsui Chemicals, Inc.) pressed into the sheet form which is 5 mm thick were stacked so as to be firmly attached each other to prepare a cuboid with a size of 500 mm × 340 mm × 150 mm (in height). The cuboid was then floated on the liquid surface of a nutrient solution (the composition is shown in Table 18) poured into a cultivation case to allow the nutrient solution to penetrate into the synthetic pulps from the lower parts of the synthetic pulps. A hole with a sufficient size to put a seed in was formed in the upper surface of the synthetic pulps, and a corn seed was put in the hole in order to observe the growth until corn bearing the fruits at 25°C under 350 W high-pressure sodium lamp for 12 hours per day. The result of the growth is shown in Table 19.
[Table 18]

**Table 18 Composition of Nutrient Solution**

| Trade Name | Concentration (mg/l) | Trade Name | Concentration (mg/l) |
|---|---|---|---|
| Otsuka House No. 1 | 250 | Otsuka House No. 2 | 167 |
| Otsuka House No. 5 | 5 | | |

| | | | |
|---|---|---|---|
| (Note) Otsuka House: the trade name of fertilizer produced and distributed by Otsuka AgriTechno Co., Ltd. | | | |

[Table 19]

**Table 19 Result of Corn Growth (seeded on July 29, 2011)**

| | | | | | | |
|---|---|---|---|---|---|---|
| Days after Seeding (days) | 4 | 14 | 31 | 43 | 49 | 71 |
| Height of Plant (mm) | Germination | 320 | 850 | 114 | 125 | 130 |
| Growth Stage | | | | Blooming of Male flower | Blooming of Female flower | Fruition |

### (Example 17)

Synthetic pulps (SWP (registered trademark): E400, manufactured by Mitsui Chemicals, Inc.) pressed into the sheet form which is 5 mm thick were stacked so as to be firmly attached each other to prepare a cuboid with a size of 260 mm × 110 mm × 150 mm (in height). The cuboid was then floated on the liquid surface of a nutrient solution (the composition is shown in Table 18) poured into a cultivation case to allow the nutrient solution to penetrate into the synthetic pulps from the lower parts of the synthetic pulps. A hole with a sufficient size to put seeds in was formed in the upper surface of the synthetic pulps, and paddy rice seeds (Nihon-bare) were put in the hole in order to observe the growth until paddy rice maturing at 25°C under 350 W high-pressure sodium lamp for 12 hours per day. The result of the growth is shown in Table 20.
[Table 20]

**Table 20 Result of Paddy Rice Growth (seeded on December 20, 2011)**

| | | | | | | | |
|---|---|---|---|---|---|---|---|
| Days after Seeding (days) | 4 | 14 | 31 | 38 | 49 | 71 | 114 |
| Height of Plants (mm) | 3 | 180 | 490 | 720 | 780 | 1,150 | 1,200 |
| Growth Stage | Germination | | | | | Booting | Maturation |

### (Example 18)

Synthetic pulps (SWP (registered trademark): E400, manufactured by Mitsui Chemicals, Inc.) pressed into the sheet form which is 5 mm thick were stacked so as to be firmly attached each other to prepare a cuboid with a size of 500 mm × 340 mm × 150 mm (in height). The cuboid was then floated on the liquid surface of a nutrient solution (the composition is shown in Table 18) poured into a cultivation case to allow the nutrient solution to penetrate into the synthetic pulps from the lower parts of the synthetic pulps. A hole with a sufficient size to put a seed in was formed in the upper surface of the synthetic pulps, and a sorghum seed was put in the hole in order to observe the growth until sorghum bearing the fruits at 25°C under 350 W high-pressure sodium lamp for 12 hours per day. The result of the growth is shown in Table 21.
[Table 21]

**Table 21 Result of Sorghum Growth (seeded on December 20, 2011)**

| | | | | |
|---|---|---|---|---|
| Days after Seeding (days) | 4 | 49 | 71 | 114 |
| Height of Plant (mm) | 4 | 1,030 | 1,280 | 1,300 |
| Growth Stage | Germination | | Ear Emergence | Fruition |

### (Example 19)

Synthetic pulps (SWP (registered trademark): E400, manufactured by Mitsui Chemicals, Inc.) pressed into the sheet form which is 5 mm thick were prepared as a cuboid with a size of 400 mm × 200 mm × 5 mm (in height). The cuboid was then floated on the liquid surface of a nutrient solution (the composition is shown in Table 18) poured into a cultivation case to allow the nutrient solution to penetrate into the synthetic pulps from the lower parts of the synthetic pulps. Kentucky bluegrass seeds were put on the upper surface of the synthetic pulps in order to observe the growth. The result of the growth is shown in Table 22.
[Table 22]

**Table 22 Result of Kentucky Bluegrass Growth (seeded on June 4, 2012)**

| | | | | |
|---|---|---|---|---|
| Days after Seeding (days) | 5 | 11 | 21 | 67 |
| Height of Plants (mm) | Germination | 15 | 60 | 200 |

### (Example 20)

Synthetic papers produced by mixing natural pulps with synthetic pulps were pressed into the sheet form which is 0.15 mm thick and stacked so as to be firmly attached each other to prepare a cuboid with a size of 80 mm × 100 mm × 65 mm (in height). The cuboid was then floated on the liquid surface of a nutrient solution (the composition is shown in Table 2) poured into a cultivation case to allow the nutrient solution to penetrate into the synthetic papers from the lower parts of the synthetic papers. Wheat seeds were put on the upper surface of the synthetic papers in order to observe the growth of wheat under the conditions: an ambient temperature of 21 ± 3°C, a humidity of 55 ± 15%, an illuminance of 12,000 lux for 9.5 hours per day. The results of the growth and the nutrient solution consumption are shown in Table 23.
[Table 23]

**Table 23 Results of Wheat Growth and Nutrient Solution Consumption (seeded on August 27, 2011)**

| | | | | | | | | |
|---|---|---|---|---|---|---|---|---|
| Days after Seeding (days) | 3 | 8 | 14 | 23 | 35 | 49 | 56 | 72 |
| Height of Plants (mm) | Germination | 80 | 155 | 180 | 180 | 180 | 285 | 320 |
| Number of Leaves (pieces) | | 1 | 2 | 3 | 4 | 6 | 7 | 8 |
| Integrated Nutrient Solution Consumption (mL) | | | | 450 | | | | 950 |

### (Example 21)

Natural pulp papers produced by natural pulps were pressed into the sheet form which is 0.15 mm thick and stacked so as to be firmly attached each other to prepare a cuboid with a size of 80 mm × 100 mm × 65 mm (in height). The cuboid was then floated on the liquid surface of a nutrient solution (the composition is shown in Table 2) poured into a cultivation case to allow the nutrient solution to penetrate into the natural pulp papers from the lower parts of the natural pulp papers. Wheat seeds were put on the upper surface of the synthetic papers in order to observe the growth of wheat under the following conditions: an ambient temperature of 21 ± 3°C, a humidity of 55 ± 15%, an illuminance of 12,000 lux for 9.5 hours per day. The results of the growth and the nutrient solution consumption are shown in Table 24.
[Table 24]

**Table 24 Results of Wheat Growth and Nutrient Solution Consumption (seeded on August 27, 2011)**

| | | | | | | | | |
|---|---|---|---|---|---|---|---|---|
| Days after Seeding (days) | 3 | 8 | 14 | 20 | 27 | 34 | 41 | 48 |
| Height of Plants (mm) | Germination | 45 | 150 | 170 | 200 | 200 | 240 | 360 |
| Number of Leaves (pieces) | | 1 | 2 | 3 | 4 | 5 | 6 | 7 |
| Integrated Nutrient Solution Consumption (mL) | | | 200 | | 350 | | 500 | |
| Days after Seeding (days) | 57 | 65 | 71 | 78 | | | | |
| Height of Plants (mm) | 440 | 440 | 440 | 440 | | | | |
| Number of Leaves (pieces) | 9 | 10 | 10 | 11 | | | | |
| Integrated Nutrient Solution Consumption (mL) | 650 | | 900 | 1,025 | | | | |

### (Example 22)

Polyester papers produced by mixing polyesters with natural pulps were pressed into the sheet form which is 0.3 mm thick and stacked so as to be firmly attached each other to prepare a cuboid with a size of 80 mm × 100 mm × 65 mm (in height). The cuboid was then floated on the liquid surface of a nutrient solution (the composition is shown in Table 2) poured into a cultivation case to allow the nutrient solution to penetrate into the polyester papers from the lower parts of the polyester papers. Wheat seeds were put on the upper surface of the polyester papers in order to observe the growth of wheat under the following conditions: an ambient temperature of 21 ± 3°C, a humidity of 55 ± 15%, an illuminance of 12,000 lux for 9.5 hours per day. The results of the growth and the nutrient solution consumption are shown in Table 25.
[Table 25]

**Table 25 Results of Wheat Growth and Nutrient Solution Consumption (seeded on December 28, 2012)**

| | | | | | | | |
|---|---|---|---|---|---|---|---|
| Days after Seeding (days) | 4 | 12 | 20 | 25 | 34 | 41 | 48 |
| Height of Plants (mm) | Germination | 162 | 275 | 313 | 385 | 417 | 425 |
| Number of Leaves (pieces) | | 2 | 4 | 5 | 5 | 7 | 10 |
| Integrated Nutrient Solution Consumption (mL) | | 17 | 50 | 94 | 138 | 182 | 226 |
| Days after Seeding (days) | 53 | 60 | | | | | |
| Height of Plants (mm) | 427 | 438 | | | | | |
| Number of Leaves (pieces) | 12 | 13 | | | | | |
| Integrated Nutrient Solution Consumption (mL) | 282 | 360 | | | | | |

### (Example 23)

Liquid supply holes were formed in a commercially available polyethylene tubing which is 15 mmϕ in an inner diameter and 18 mmϕ in an outer diameter, and synthetic pulps (SWP (registered trade mark): E400, manufactured by Mitsui Chemicals, Inc.) pressed into the sheet form which is 100 mm wide and 5 mm thick were bolted on the tubing so as to be firmly attached with the holes and the joint part was sealed with heat. The aforementioned bolting the synthetic pulps and heat sealing were repeated three times so that synthetic pulps were firmly attached each other to prepare the cylindrical synthetic pulps which are 48 mmϕ in a diameter (including the outer diameter of the polyethylene tubing) and 100 mm wide and fixed on the polyethylene tubing. Wheat seeds were put on the upper surface of the synthetic pulps, a nutrient solution (the composition is shown in Table 2) was added into the polyethylene tubing, and the amount of the nutrient solution same as that consumed by wheat growing was in appropriate timing replenished into the tubing in order to observe the growth of wheat under the following conditions: an ambient temperature of 21 ± 3°C, a humidity of 55 ± 15%, an illuminance of 12,000 lux for 9.5 hours per day. The results of the growth and the nutrient solution consumption are shown in Table 26.
[Table 26]

**Table 26 Results of Wheat Growth and Nutrient Solution Consumption (seeded on August 15, 2011)**

| | | | | | | |
|---|---|---|---|---|---|---|
| Days after Seeding (days) | 8 | 10 | 11 | 14 | 18 | 23 |
| Height of Plants (mm) | | 45 | 75 | 155 | 240 | 315 |
| Number of Leaves (pieces) | | 1 | 2 | 2 | 3 | 4 |
| Growth Stage | Germination | | | | | |
| Integrated Nutrient Solution Consumption (mL) | | 300 | | 350 | 400 | 450 |
| Days after Seeding (days) | 29 | 35 | 39 | 42 | 49 | 63 |
| Height of Plants (mm) | 365 | 385 | 385 | 400 | 400 | 400 |
| Number of Leaves (pieces) | 5 | 6 | 10 | 12 | 13 | 16 |
| Growth Stage | | Tillering | | | | |
| Integrated Nutrient Solution Consumption (mL) | 500 | 575 | 600 | 625 | 650 | 675 |
| Days after Seeding (days) | 72 | 80 | 86 | 93 | | |
| Height of Plants (mm) | 410 | 420 | 420 | 430 | | |
| Number of Leaves (pieces) | 16 | 17 | 18 | 20 | | |
| Growth Stage | | | | Booting | | |
| Integrated Nutrient Solution Consumption (mL) | | 700 | | 725 | | |

### (Example 24)

Liquid supply holes were formed in a commercially available polyethylene tubing which is 15 mmϕ in an inner diameter and 18 mmϕ in an outer diameter, and synthetic pulps (SWP (registered trade mark): E400, manufactured by Mitsui Chemicals, Inc.) pressed into the sheet form which is 100 mm wide and 5 mm thick were bolted on the tubing so as to be firmly attached with the holes and the joint part was sealed with heat. The aforementioned bolting the synthetic pulps and heat sealing were repeated three times so that synthetic pulps were firmly attached each other to prepare the cylindrical synthetic pulps which are 48 mmϕ in a diameter (including the outer diameter of the polyethylene tubing) and 100 mm wide and fixed on the polyethylene tubing. One of the ends of the polyethylene tubing was connected to the liquid supply tank filled with a nutrient solution (the composition is shown in Table 2), and prunus sargentii seeds were put on the upper surface of the synthetic pulps. The synthetic pulps were covered with river sands in a thickness of about 2 cm, and the nutrient solution was in appropriate timing replenished into the tank in order to observe the growth of prunus sargentii under the following conditions: an ambient temperature of 21 ± 3°C, a humidity of 55 ± 15%, an illuminance of 12,000 lux for 9.5 hours per day. The results of the growth and the nutrient solution consumption are shown in Table 27.
[Table 27]

**Table 27 Results of Prunus Sargentii Growth and Nutrient Solution Consumption (seeded on October 23, 2012)**

| | | | | | | |
|---|---|---|---|---|---|---|
| Days after Seeding (days) | 3 | 6 | 10 | 15 | 21 | 28 |
| Height of Plants (mm) | Germination | 40 | 65 | 80 | 95 | 120 |
| Number of Leaves (pieces) | | 4 | 6 | 6 | 7 | 8 |
| Integrated Nutrient Solution Consumption (mL) | | | 25 | 50 | | 75 |
| Days after Seeding (days) | 35 | 45 | 65 | | | |
| Height of Plants (mm) | 145 | 165 | 175 | | | |
| Number of Leaves (pieces) | 9 | 11 | 12 | | | |
| Integrated Nutrient Solution Consumption (mL) | 100 | 125 | 200 | | | |

### (Examples 25 to 29)

Leaf lettuce, celery, nigella, corn poppy and myosotis were seeded in the same manner as in Example 24 in order to observe each of the growth. The results of the growth and the nutrient solution consumption are shown in Tables 28 to 32.
[Table 28]

**Table 28 Results of Leaf lettuce Growth and Nutrient Solution Consumption (seeded on December 28, 2012)**

| | | | | | | |
|---|---|---|---|---|---|---|
| Days after Seeding (days) | 5 | 12 | 20 | 25 | 34 | 41 |
| Height of Plants (mm) | 5 | 22 | 55 | 70 | 110 | 160 |
| Number of Leaves (pieces) | 2 | 4 | 6 | 8 | 11 | 12 |
| Integrated Nutrient Solution Consumption (mL) | | 50 | 75 | 100 | | 125 |
| Days after Seeding (days) | 48 | 53 | 60 | | | |
| Height of Plants (mm) | 175 | 175 | 180 | | | |
| Number of Leaves (pieces) | 17 | 19 | 22 | | | |
| Integrated Nutrient Solution Consumption (mL) | | 150 | | | | |

[Table 29]

**Table 29 Results of Celery Growth and Nutrient Solution Consumption (seeded on December 28, 2012)**

| | | | | | | |
|---|---|---|---|---|---|---|
| Days after Seeding (days) | 5 | 12 | 20 | 25 | 34 | 41 |
| Height of Plants (mm) | 5 | 10 | 18 | 35 | 70 | 75 |
| Number of Leaves (pieces) | 1 | 1 | 1 | 2 | 2 | 3 |
| Integrated Nutrient Solution Consumption (mL) | | 50 | 75 | | 100 | 150 |
| Days after Seeding (days) | 48 | 53 | 60 | | | |
| Height of Plants (mm) | 80 | 80 | 80 | | | |
| Number of Leaves (pieces) | 3 | 4 | 5 | | | |
| Integrated Nutrient Solution Consumption (mL) | | 175 | | | | |

[Table 30]

**Table 30 Results of Nigella Growth and Nutrient Solution Consumption (seeded on January 17, 2013)**

| | | | | | | |
|---|---|---|---|---|---|---|
| Days after Seeding (days) | 5 | 14 | 21 | 28 | 33 | 40 |
| Height of Plants (mm) | 2 | 5 | 7 | 8 | 10 | 15 |
| Number of Leaves (pieces) | 2 | 2 | 3 | 4 | 4 | 5 |
| Integrated Nutrient Solution Consumption (mL) | 50 | 100 | | | 125 | |

[Table 31]

**Table 31 Results of Corn poppy Growth and Nutrient Solution Consumption (seeded on December 28, 2012)**

| | | | | | | |
|---|---|---|---|---|---|---|
| Days after Seeding (days) | 5 | 12 | 20 | 25 | 34 | 41 |
| Height of Plants (mm) | 7 | 10 | 10 | 15 | 30 | 45 |
| Number of Leaves (pieces) | 2 | 4 | 6 | 9 | 12 | 18 |
| Integrated Nutrient Solution Consumption (mL) | | 50 | 100 | | | |
| Days after Seeding (days) | 48 | 53 | 60 | | | |
| Height of Plants (mm) | 65 | 80 | 100 | | | |
| Number of Leaves (pieces) | 20 | 25 | 28 | | | |
| Integrated Nutrient Solution Consumption (mL) | | 200 | | | | |

[Table 32]

**Table 32 Growth Results of Myosotis and Consumption of Nutrient Solution (seeded on December 28, 2012)**

| | | | | | | |
|---|---|---|---|---|---|---|
| Days after Seeding (days) | 5 | 12 | 20 | 25 | 34 | 41 |
| Height of Plants (mm) | 5 | 10 | 13 | 15 | 22 | 23 |
| Number of Leaves (pieces) | 2 | 2 | 2 | 2 | 4 | 4 |
| Integrated Nutrient Solution Consumption (mL) | | 50 | | | | |
| Days after Seeding (days) | 48 | 53 | 60 | | | |
| Height of Plants (mm) | 25 | 25 | 27 | | | |
| Number of Leaves (pieces) | 4 | 6 | 6 | | | |
| Integrated Nutrient Solution Consumption (mL) | | 100 | | | | |

### (Example 30)

Liquid Supply holes were formed in a commercially available polyethylene tubing which is 15 mmϕ in an inner diameter and 18 mmϕ in an outer diameter, and synthetic pulps (SWP (registered trade mark): E400, manufactured by Mitsui Chemicals, Inc.) pressed into the sheet form which is 100 mm wide and 5 mm thick were bolted on the tubing so as to be firmly attached with the holes and the joint part was sealed with heat. The aforementioned bolting the synthetic pulps and heat sealing were repeated three times so that synthetic pulps were firmly attached each other to prepare the cylindrical synthetic pulps which are 48 mmϕ in a diameter (including the outer diameter of the polyethylene tubing) and 100 mm wide and fixed on the polyethylene tubing. One of the ends of the polyethylene tubing was connected to the liquid supply tank filled with a nutrient solution (the composition is shown in Table 2), two holes which is 2 mmϕ in a diameter and 10 mm deep were formed in the surface of the synthetic pulps, and wheat seeds were put in the holes. The synthetic pulps were covered with river sands in a thickness of about 2 cm, and the nutrient solution was in appropriate timing replenished into the tank in order to observe the growth of wheat under the following conditions: an ambient temperature of 21 ± 3°C, a humidity of 55 ± 15%, an illuminance of 12,000 lux for 9.5 hours per day. The results of the growth and the nutrient solution consumption are shown in Table 33.
[Table 33]

**Table 33 Results of Wheat Growth and Nutrient Solution Consumption (seeded on August 27, 2012)**

| | | | | | | |
|---|---|---|---|---|---|---|
| Days after Seeding (days) | 5 | 9 | 11 | 14 | 18 | 23 |
| Height of Plants (mm) | | 82 | 120 | 177 | 260 | 302 |
| Number of Leaves (pieces) | | 1 | 2 | 2 | 4 | 5 |
| Growth Stage | Germination | | | | | |
| Integrated Nutrient Solution Consumption (mL) | | 250 | | 275 | 300 | 325 |
| Days after Seeding (days) | 30 | 35 | 39 | 42 | 51 | 63 |
| Height of Plants (mm) | 350 | 387 | 395 | 414 | 425 | 435 |
| Number of Leaves (pieces) | 7 | 9 | 11 | 14 | 16 | 18 |
| Growth Stage | Tillering | | | | | |
| Integrated Nutrient Solution Consumption (mL) | 350 | 450 | 500 | 550 | 600 | 675 |
| Days after Seeding (days) | 72 | 76 | 86 | 93 | | |
| height of Plants (mm) | 484 | 510 | 529 | 545 | | |
| Number of Leaves (pieces) | 19 | 19 | 20 | 21 | | |
| Growth Stage | | Booting | | | | |
| Integrated Nutrient Solution Consumption (mL) | 750 | 775 | 800 | | | |

### (Example 31)

A triangle pole form of synthetic pulps was prepared by stacking three sheets with a size of 50 mm × 700 mm prepared by synthetic pulps (SWP (registered trade mark): E400, manufactured by Mitsui Chemicals, Inc.) pressed into the sheet form which is of 5 mm thick so that each 700 mm long edge was firmly attached each other, a porous tubing, manufactured by KAKUDAI MFG. Co., Ltd., which is 15 mmϕ in an inner diameter and 21 mmϕ in an outer diameter, was inserted into the triangle pole form of synthetic pulps, and the synthetic pulps were fixed by insulation lock bands so that each sheet form synthetic pulp was firmly attached with the porous tubing. One of the ends of the porous tubing was connected to the liquid supply tank filled with a nutrient solution (the composition is shown in Table 18) via an electromagnetic valve in order to sequentially supply the nutrient solution to the porous tubing, and the other end of the tubing was connected to a drainage water storage tank in order to temporarily store the nutrient solution not transferred to the synthetic pulps in the storage tank and then to return to the liquid supply tank for reuse. Wheat seeds were put on in the top of the triangle pole form of synthetic pulps, and the synthetic pulps were covered with mountain sands in a thickness of 2 cm in order to observe the growth of wheat under the following conditions: an ambient temperature of 10 to 25°C, a humidity of 30 to 50% and under natural light in a glass greenhouse. The result of the growth is shown in Table 34.
[Table 34]

**Table 34 Result of Wheat Growth (seeded on October 10, 2012)**

| | | | | |
|---|---|---|---|---|
| Days after Seeding (days) | 5 | 11 | 68 | 75 |
| Height of Plants (mm) | 10 | 80 | 500 | 600 |
| Number of Leaves (pieces) | 1 | 3 | 10 | 10 |

### (Examples 32 to 34)

Burdock, carrot and turnip were seeded in the same manner as in Example 31 in order to observe each of the growth. The result of each of the growth is shown in Tables 35 to 37.
[Table 35]

**Table 35 Result of Burdock (seeded on October 3, 2012)**

| | | | | |
|---|---|---|---|---|
| Days after Seeding (days) | 8 | 18 | 48 | 75 |
| Height of Plants (mm) | 7 | 30 | 60 | 100 |
| Number of Leaves (pieces) | 2 | 3 | 4 | 5 |

[Table 36]

**Table 36 Result of Carrot Growth (seeded on October 3, 2012)**

| | | | | |
|---|---|---|---|---|
| Days after Seeding (days) | 4 | 18 | 48 | 75 |
| Height of Plants (mm) | 3 | 30 | 175 | 250 |
| Number of Leaves (pieces) | 2 | 4 | 5 | 8 |
| Growth Stage | Germination | | | Formation of Carrot |

[Table 37]

**Table 37 Result of Turnip Growth (seeded on October 3, 2012)**

| | | | | |
|---|---|---|---|---|
| Days after Seeding (days) | 3 | 20 | 25 | 58 |
| Height of Plants (mm) | 3 | 75 | 90 | 250 |
| Number of Leaves (pieces) | 2 | 4 | 5 | 8 |
| Growth Stage | Germination | | | Formation of Turnip |

### (Example 35)

Synthetic pulps (SWP (registered trademark): E400, manufactured by Mitsui Chemicals, Inc.) pressed into the sheet form which is 5 mm thick were stacked so as to be firmly attached each other to prepare a cuboid with a size of 250 mm × 500 mm × 50 mm (in height). A commercially available polyvinyl chloride tubing which is 14 mmϕ in an inner diameter and 19 mmϕ in an outer diameter and on which liquid supply holes are formed was passed through the cuboid in a horizontal direction, and the synthetic pulps were fixed by insulation lock bands so that the synthetic pulps was firmly attached with the holes on the tubing. One of the ends of the tubing was connected to the liquid supply tank filled with a nutrient solution (the composition is shown in Table 18) via an electromagnetic valve in order to sequentially supply the nutrient solution to the tubing, and the other end of the tubing was connected to a drainage water storage tank in order to temporarily store the nutrient solution not transferred to the synthetic pulps in the storage tank and then to return to the liquid supply tank for reuse. A hole to put seeds in was formed on the upper surface of the synthetic pulps, and cotton seeds were put in the hole in order to observe the growth of cotton under the following conditions: an ambient temperature of 25°C, under illumination of 350 W high-pressure sodium lamp for 12 hours per day. The result of the growth is shown in Table 38.
[Table 38]

**Table 38 Result of Cotton Growth (seeded on December 20, 2011)**

| | | | | | |
|---|---|---|---|---|---|
| Days after Seeding (days) | 10 | 67 | 87 | 207 | 301 |
| Height of Plants (mm) | 4 | 794 | 850 | 1,200 | 1,500 |
| Growth Stage | Germination | Blooming of Flower | 9 Flower Buds | 14 Flower Buds | 26 Flower Buds |

### (Example 36)

Rapeseed was seeded in the same manner as in Example 35 in order to observe the growth. The result of the growth is shown in Table 39.
[Table 39]

**Table 39 Result of Rapeseed Growth (seeded on December 20, 2011)**

| | | | | | |
|---|---|---|---|---|---|
| Days after Seeding (days) | 6 | 66 | 98 | 121 | 161 |
| Height of Plants (mm) | 3 | 18 | 30 | 98 | 104 |
| Growth Stage | Germination | | | Blooming of Flower | Fruition |

### (Example 37)

Synthetic pulps (SWP (registered trademark): E400, manufactured by Mitsui Chemicals, Inc.) pressed into the sheet form which is 5 mm thick were stacked so as to be firmly attached each other to prepare a cuboid with a size of 80 mm × 700 mm × 50 mm (in height). A porous tubing manufactured by KAKUDAI MFG. Co., Ltd. which is 14 mmϕ in an inner diameter and 21 mmϕ in an outer diameter was passed through the cuboid in a horizontal direction, and the synthetic pulps were fixed by insulation lock bands so that the synthetic pulps was firmly attached with the tubing. One of the ends of the tubing was connected to the liquid supply tank filled with a nutrient solution (the composition is shown in Table 18) via an electromagnetic valve in order to sequentially supply the nutrient solution the tubing, and the other end of the tubing was connected to a drainage water storage tank in order to temporarily store the nutrient solution not transferred to the synthetic pulps in the storage tank and then to return to the liquid supply tank for reuse. A hole to put a seed in was formed on the upper surface of the synthetic pulps, a corn seed was put in the hole, and the synthetic pulps were covered with mountain sands in a thickness of 3 cm in order to observe the growth of corn under the following conditions: an ambient temperature of 10 to 45°C, a humidity of 30 to 50% and under natural light in a glass greenhouse. The result of the growth is shown in Table 40.
[Table 40]

**Table 40 Result of Corn Growth (seeded on July 27, 2012)**

| | | | | | |
|---|---|---|---|---|---|
| Days after Seeding (days) | 3 | 44 | 58 | 75 | 116 |
| Height of Plant (mm) | 10 | 200 | 500 | 600 | 1,000 |
| Number of Leaves (pieces) | 1 | 3 | 4 | 7 | 7 |
| Growth Stage | Germination | | | Blooming of Male flower | Fruition |

### (Example 38)

Sorghum was seeded in the same manner as in Example 37 in order to observe the growth. The result of growth is shown in Table 41.
[Table 41]

**Table 41 Result of Sorghum Growth (seeded on April 18, 2012)**

| | | | | |
|---|---|---|---|---|
| Days after Seeding (days) | 4 | 11 | 14 | 63 |
| Height of Plant (mm) | 5 | 100 | 150 | 1,000 |
| Number of Leaves (pieces) | 1 | 3 | 4 | 8 |
| Growth Stage | Germination | | | ear emergence |

### (Example 39)

Synthetic pulps (SWP (registered trademark): E400, manufactured by Mitsui Chemicals, Inc.) pressed into the sheet form which is 5 mm thick were stacked so as to be firmly attached each other to prepare two cuboids with a size of 80 mm × 700 mm × 15 mm (in height). A porous tubing manufactured by KAKUDAI MFG. Co., Ltd. which is 14 mmϕ in an inner diameter and 21 mmϕ in an outer diameter was sandwiched by the aforementioned two cuboids of synthetic pulps and the synthetic pulps were fixed by insulation lock bands so that the synthetic pulps were firmed attached with the tubing. One of the ends of the tubing was connected to the liquid supply tank filled with a nutrient solution (the composition is shown in Table 18) via an electromagnetic valve in order to sequentially supply the nutrient solution to the tubing, and the other end of the tubing was connected to a drainage water storage tank in order to temporarily store the nutrient solution not transferred to the synthetic pulps in the storage tank and then to return to the liquid supply tank for reuse. A part of 150 mm from a cleavage point of a nursery of sweet potato which is 300 mm long was transplanted between the synthetic pulp layers of the upper part of the synthetic pulps, and the synthetic pulps were covered with mountain sands in a thickness of 3 cm in order to observe the growth of sweet potato under the following conditions: an ambient temperature of 10 to 45°C, a humidity of 30 to 50% and under natural light in a glass greenhouse. The result of growth is shown in Table 42.
[Table 42]

**Table 42 Result of Sweet potato Growth (nursery transplanted on September 14, 2012)**

| | | | | | | |
|---|---|---|---|---|---|---|
| Days after transplanting (days) | 0 | 12 | 23 | 37 | 52 | 67 |
| Height of Plant (mm) | 150 | 200 | 400 | 600 | 900 | 1,200 |
| Number of Leaves (pieces) | 8 | 16 | 30 | 50 | 60 | 60 |

### (Example 40)

Liquid supply holes were formed in a commercially available polyethylene tubing which is 15 mmϕ in an inner diameter and 18 mmϕ in an outer diameter, synthetic pulps (SWP (registered trade mark): E400, manufactured by Mitsui Chemicals, Inc.) pressed into the sheet form which is 100 mm wide and 5 mm thick were bolted on the tubing so as to be firmly attached with the holes, and the joint part was sealed with heat to prepare the cylindrical synthetic pulps which are 28 mmϕ in a diameter (including the outer diameter of the polyethylene tubing) and 100 mm wide and fixed on the polyethylene tubing. After one of the ends of the polyethylene tubing was connected to the liquid supply tank filled with a nutrient solution (the composition is shown in Table 18) via a connection valve and the other end of the polyethylene tubing was closed, wheat seeds were put on the surface of the synthetic pulps. The liquid supply tank was placed on the surface of soils, the polyethylene tubing was buried so that the synthetic pulps was placed at a depth of 5 cm from the soil surface, and the nutrient solution was supplied from the liquid supply tank to the polyethylene tubing by opening the connection valve. The nutrient solution was in appropriate timing replenished into the liquid supply tank in order to observe the growth of wheat at 20 to 30°C under natural light in a glass greenhouse. The results of the growth, the nutrient solution consumption and the yield are shown in Table 43.
[Table 43]

**Table 43 Results of Wheat Growth, Nutrient Solution Consumption and Yield (seeded on February 10, 2012)**

| | | | | | |
|---|---|---|---|---|---|
| Days after Seeding (days) | 7 | 15 | 25 | 34 | 48 |
| Height of Plants (mm) | 82 | 216 | 255 | 418 | 535 |
| Number of Active Tillers (pieces) | 1 | 1 | 2 | 3 | 6 |
| Integrated Nutrient Solution Consumption (mL) | 600 | 1,000 | 1,800 | 3,000 | 3,800 |
| Days after Seeding (days) | 59 | 67 | 73 | 81 | 90 |
| Height of Plants (mm) | 655 | 658 | 677 | 677 | |
| Number of Active Tillers (pieces) | 14 | 16 | 16 | 16 | |
| Integrated Nutrient Solution Consumption (mL) | 4,200 | 4,600 | 4,800 | 5,500 | |
| Yield (g/seed) | | | | | 1.2 |

### (Examples 41 and 42)

Corn and soybean were seeded in the same manner as in Example 40 to observe each of the growth. The results of the growth, nutrient solution consumption and the yield are shown in Tables 44 and 45.
[Table 44]

**Table 44 Results of Corn Growth and Nutrient Solution Consumption (seeded on March 28, 2012)**

| | | | | | |
|---|---|---|---|---|---|
| Days after Seeding (days) | 7 | 14 | 19 | 25 | 33 |
| Height of Plants (mm) | 50 | 244 | 411 | 632 | 954 |
| Integrated Nutrient Solution Consumption (mL) | 100 | | 300 | | 400 |
| Days after Seeding (days) | 43 | 48 | 55 | 63 | 74 |
| Height of Plants (mm) | 1,073 | 1,079 | 1,450 | 1,800 | 1,850 |
| Integrated Nutrient Solution Consumption (mL) | 700 | 800 | | 1,000 | 1,200 |

[Table 45]

**Table 45 Results of Soybean Growth, Nutrient Solution Consumption and Yield (seeded on June 28, 2012)**

| | | | | | |
|---|---|---|---|---|---|
| Days after Seeding (days) | 7 | 11 | 19 | 28 | 37 |
| Height of Plants (mm) | 0 | 162 | 278 | 360 | 430 |
| Integrated Nutrient Solution Consumption (mL) | | 300 | 600 | 700 | 1,000 |
| Days after Seeding (days) | 42 | 49 | 55 | 62 | 70 |
| Height of Plants (mm) | 450 | 470 | 485 | 490 | 490 |
| Integrated Nutrient Solution Consumption (mL) | 1,100 | | 1,300 | 1,600 | 1,800 |
| Yield (g/seed) | | | | | 26.2 |

### (Example 43)

Liquid supply holes were formed in a commercially available polyethylene tubing which is 15 mmϕ in an inner diameter and 18 mmϕ in an outer diameter, synthetic pulps (SWP (registered trade mark): E400, manufactured by Mitsui Chemicals, Inc.) pressed into the sheet form which is 100 mm wide and 5 mm thick were bolted on the tubing so as to be firmly attached with the holes, and the joint part was sealed with heat. The aforementioned bolting the synthetic pulps and heat sealing were repeated three times so that synthetic pulps were firmly attached each other to prepare the cylindrical synthetic pulps which are 48 mmϕ in a diameter (including the outer diameter of the polyethylene tubing) and 100 mm wide and fixed on the polyethylene tubing. After one of the ends of the polyethylene tubing was connected to the liquid supply tank filled with a nutrient solution (the composition is shown in Table 18) via a connection valve and the other end of the polyethylene tubing was closed, a hole with a size of 20 mm × 20 mm × 10 mm (in depth) were formed in the surface of the synthetic pulps, and wheat seeds were put in the hole. The liquid supply tank was placed on the surface of soils, the polyethylene tubing was buried so that the synthetic pulps was placed at a depth of 5 cm from the soil surface, and the nutrient solution was supplied from the liquid supply tank to the polyethylene tubing by opening the connection valve. The nutrient solution was in appropriate timing replenished into the liquid supply tank in order to observe the growth of wheat at 20 to 30°C under natural light in a glass greenhouse. The results of the growth, the nutrient solution consumption and the yield are shown in Table 46.
[Table 46]

**Table 46 Results of Wheat Growth, Nutrient Solution Consumption and Yield (seeded on February 10, 2012)**

| | | | | | |
|---|---|---|---|---|---|
| Days after Seeding (days) | 5 | 10 | 22 | 31 | 45 |
| Height of Plants (mm) | 90 | 238 | 281 | 460 | 589 |
| Number of Active Tillers (pieces) | 1 | 2 | 2 | 5 | 9 |
| Integrated Nutrient Solution Consumption (mL) | 600 | 1,000 | 1,800 | 3,000 | 3,800 |
| Days after Seeding (days) | 55 | 62 | 73 | 81 | 90 |
| Height of Plants (mm) | 721 | 724 | 745 | 745 | |
| Number of Active Tillers (pieces) | 16 | 18 | 18 | 18 | |
| Integrated Nutrient Solution Consumption (mL) | 4,200 | 4,600 | 4,800 | 5,500 | |
| Yield (g/seed) | | | | | 1.3 |

### (Examples 44 to 47)

Corn, soybean, cabbage and grape tomato were seeded in the same manner as in Example 43 to observe each of the growth. The results of the growth, the nutrient solution consumption and the yield are shown in Tables 47 to 50.
[Table 47]

**Table 47 Results of Corn Growth and Nutrient Solution Consumption (seeded on March 28, 2012)**

| | | | | | |
|---|---|---|---|---|---|
| Days after Seeding (days) | 7 | 14 | 19 | 25 | 33 |
| Height of Plants (mm) | 55 | 268 | 452 | 695 | 1,049 |
| Integrated Nutrient Solution Consumption (mL) | 100 | | 300 | | 400 |
| Days after Seeding (days) | 43 | 48 | 55 | 63 | 74 |
| Height of Plants (mm) | 1,180 | 1,187 | 1,595 | 1,980 | 2,035 |
| Integrated Nutrient Solution Consumption (mL) | 700 | 800 | | 1,000 | 1,200 |

[Table 48]

**Table 48 Results of Soybean Growth, Nutrient Solution Consumption and Yield (seeded on June 28, 2012)**

| | | | | | |
|---|---|---|---|---|---|
| Days after Seeding (days) | 7 | 11 | 19 | 28 | 37 |
| Height of Plants (mm) | 5 | 178 | 306 | 396 | 473 |
| integrated Nutrient Solution Consumption (mL) | | 300 | 600 | 700 | 1,000 |
| Days after Seeding (days) | 42 | 49 | 55 | 62 | 70 |
| Height of Plants (mm) | 495 | 517 | 534 | 539 | 539 |
| Integrated Nutrient Solution Consumption (mL) | 1,100 | | 1,300 | 1,600 | 1,800 |
| Yield (g/seed) | | | | | 28.8 |

[Table 49]

**Table 49 Results of Cabbage Growth and Nutrient Solution Consumption (seeded on October 29, 2012)**

| | | | | | |
|---|---|---|---|---|---|
| Days after Seeding (days) | 11 | 24 | 36 | 44 | 52 |
| Height of Plants (mm) | 10 | 23 | 52 | 61 | 83 |
| Number of Leaves (pieces) | 2 | 5 | 7 | 9 | 12 |
| Integrated Nutrient Solution Consumption (mL) | | 600 | | 1,000 | 1,200 |
| Days after Seeding (days) | 59 | 67 | 74 | 81 | 88 |
| Height of Plants (mm) | 83 | 116 | 153 | 195 | 232 |
| Number of Leaves (pieces) | 18 | 22 | 24 | 26 | 28 |
| Integrated Nutrient Solution Consumption (mL) | 1,400 | 1,600 | | 1,800 | |
| Days after Seeding (days) | 59 | 67 | 74 | 81 | 88 |
| Height of Plants (mm) | 83 | 116 | 153 | 195 | 232 |
| Number of Leaves (pieces) | 18 | 22 | 24 | 26 | 28 |
| Integrated Nutrient Solution Consumption (mL) | 1,400 | 1,600 | | 1,800 | |

[Table 50]

**Table 50 Results of Grape tomato and Nutrient Solution Consumption (seeded on October 29, 2012)**

| | | | | | |
|---|---|---|---|---|---|
| Days after Seeding (days) | 8 | 17 | 24 | 32 | 39 |
| Height of Plants (mm) | 8 | 38 | 82 | 144 | 196 |
| Number of Leaves (pieces) | 2 | 9 | 15 | 27 | 50 |
| Number of Flower Buds (pieces) | | | | | |
| Number of Fruits (pieces) | | | | | |
| Integrated Nutrient Solution Consumption (mL) | | 400 | 600 | | 1,000 |
| Days after Seeding (days) | 52 | 67 | 81 | 88 | |
| Height of Plants (mm) | 328 | 570 | 720 | 758 | |
| Number of Leaves (pieces) | 74 | 119 | 220 | 232 | |
| Number of Flower Buds (pieces) | 7 | 16 | 25 | 17 | |
| Number of Fruits (pieces) | | 2 | 5 | 8 | |
| Integrated Nutrient Solution Consumption (mL) | | 1,400 | 1,800 | 2,000 | |

### (Example 48)

Liquid supply holes were formed in a commercially available polyethylene tubing which is 15 mmϕ in an inner diameter and 18 mmϕ in an outer diameter, synthetic pulps (SWP (registered trade mark): E400, manufactured by Mitsui Chemicals, Inc.) pressed into the sheet form which is 50 mm wide and 5 mm thick were bolted on the tubing so as to be firmly attached with the holes, and the joint part was sealed with heat. The aforementioned bolting the synthetic pulps and heat sealing were repeated three times so that synthetic pulps were firmly attached each other to prepare the cylindrical synthetic pulps which are 48 mmϕ in a diameter (including the outer diameter of the polyethylene tubing) and 50 mm wide, and fixed on the polyethylene tubing. After one of the ends of the polyethylene tubing was connected to the liquid supply tank filled with a nutrient solution (the composition is shown in Table 18) via a connection valve and the other end of the polyethylene tubing was closed, a hole with a size of 20 mm × 20 mm × 10 mm (in depth) were formed in the surface of the synthetic pulps and wheat seeds were put in the hole. The liquid supply tank was placed on the surface of soils, the polyethylene tubing was buried so that the synthetic pulps was placed at a depth of 5 cm from the soil surface, and the nutrient solution was supplied from the liquid supply tank to the polyethylene tubing by opening the connection valve. The nutrient solution was in appropriate timing replenished into the liquid supply tank in order to observe the growth of wheat at 20 to 30°C under natural light in a glass greenhouse. The results of the growth, the nutrient solution consumption and the yield are shown in Table 51
[Table 51]

**Table 51 Results of Wheat Growth, Nutrient Solution Consumption and Yield (seeded on October 29, 2012)**

| | | | | | |
|---|---|---|---|---|---|
| Days after Seeding (days) | 5 | 10 | 22 | 31 | 45 |
| Height of Plants (mm) | 81 | 214 | 253 | 414 | 530 |
| Number of Active Tillers (pieces) | 1 | 1 | 2 | 3 | 6 |
| Integrated Nutrient Solution Consumption (mL) | 600 | 1,000 | 1,800 | 3,000 | 3,800 |
| Days after Seeding (days) | 55 | 62 | 73 | 81 | 90 |
| Height of Plants (mm) | 649 | 652 | 671 | 671 | |
| Number of Active Tillers (pieces) | 14 | 14 | 16 | 16 | |
| Integrated Nutrient Solution Consumption (mL) | 4,200 | 4,600 | 4,800 | 5,500 | |
| Yield (g/seed) | | | | | 1.1 |

### (Example 49)

Corn was seeded in the same manner as in Example 48 in order to observe the growth. The results of the growth and the nutrient solution consumption are shown in Table 52.
[Table 52]

**Table 52 Results of Corn Growth and Nutrient Solution Consumption (seeded on October 29, 2012)**

| | | | | | |
|---|---|---|---|---|---|
| Days after Seeding (days) | 7 | 14 | 19 | 25 | 33 |
| Height of Plants (mm) | 50 | 241 | 407 | 626 | 944 |
| Integrated Nutrient Solution Consumption (mL) | 100 | | 300 | | 400 |
| Days after Seeding (days) | 43 | 48 | 55 | 63 | 74 |
| Height of Plants (mm) | 1,062 | 1,068 | 1,436 | 1,782 | 1,832 |
| Integrated Nutrient Solution Consumption (mL) | 700 | 800 | | 1,000 | 1,200 |

### (Example 50)

Liquid supply holes were formed in a commercially available polyethylene tubing which is 15 mmϕ in an inner diameter and 18 mmϕ in an outer diameter, synthetic pulps (SWP (registered trade mark): E400, manufactured by Mitsui Chemicals, Inc.) pressed into the sheet form which is 100 mm wide and 5 mm thick were bolted on the tubing so as to be firmly attached with the holes, and the joint part was sealed with heat. The aforementioned bolting the synthetic pulps and heat sealing were repeated three times so that synthetic pulps were firmly attached each other to prepare the cylindrical synthetic pulps which are 48 mmϕ in a diameter (including the outer diameter of the polyethylene tube) and 100 mm wide on the polyethylene tubing. After one of the ends of the polyethylene tubing was connected to the liquid supply tank filled with a nutrient solution (the composition is shown in Table 18) via a connection valve and the other end of the polyethylene tubing was closed, a hole with a size of 20 mm × 20 mm × 10 mm (in depth) were formed in the surface of the synthetic pulps and wheat seeds were put in the hole. After a film of polyvinyl alcohol (50 mm wide) for Holceron manufactured by Nippon Plant Seeder Co., Ltd. was bolted on the outer periphery of the cylindrical synthetic pulps so as to cover the holes in which the seeds were put, the liquid supply tank was placed on the surface of soils, the polyethylene tubing was buried so that the synthetic pulps was placed at a depth of 5 cm from the soil surface, and the nutrient solution was supplied from the liquid supply tank to the polyethylene tubing by opening the connection valve. The nutrient solution was in appropriate timing replenished into the liquid supply tank in order to observe the growth of wheat at 20 to 30°C under natural light in a glass greenhouse. The results of the growth, the nutrient solution consumption and the yield are shown in Table 53.
[Table 53]

**Table 53 Results of Wheat Growth, Nutrient Solution Consumption and Yield (seeded on October 29, 2012)**

| | | | | | |
|---|---|---|---|---|---|
| Days after Seeding (days) | 5 | 10 | 22 | 31 | 45 |
| Height of Plants (mm) | 87 | 235 | 284 | 465 | 595 |
| Number of Active Tillers (pieces) | 1 | 2 | 2 | 6 | 9 |
| Integrated Nutrient Solution Consumption (mL) | 600 | 1,000 | 1,800 | 3,000 | 3,800 |
| Days after Seeding (days) | 55 | 62 | 73 | 81 | 90 |
| Height of Plants (mm) | 725 | 730 | 754 | 755 | |
| Number of Active Tillers (pieces) | 16 | 18 | 18 | 18 | |
| Integrated Nutrient Solution Consumption (mL) | 4,200 | 4,600 | 4,800 | 5,500 | |
| Yield (g/seed) | | | | | 1.3 |

### (Example 51)

Corn was seeded in the same manner as in Example 50 in order to observe the growth. The results of the growth and the nutrient solution consumption are shown in Table 54.
[Table 54]

**Table 54 Results of Corn Growth and Nutrient Solution Consumption (seeded on October 29, 2012)**

| | | | | | |
|---|---|---|---|---|---|
| Days after Seeding (days) | 7 | 14 | 19 | 25 | 33 |
| Height of Plants (mm) | 52 | 265 | 455 | 698 | 1,052 |
| Integrated Nutrient Solution Consumption (mL) | 100 | | 300 | | 400 |
| Days after Seeding (days) | 43 | 48 | 55 | 63 | 74 |
| Height of Plants (mm) | 1,187 | 1,195 | 1,602 | 1,993 | 2,042 |
| Integrated Nutrient Solution Consumption (mL) | 700 | 800 | | 1,000 | 1,200 |

### (Example 52)

Liquid supply holes were formed in a commercially available polyethylene tubing which is 15 mmϕ in an inner diameter and 18 mmϕ in an outer diameter, synthetic pulps (SWP (registered trade mark): E400, manufactured by Mitsui Chemicals, Inc.) pressed into the sheet form which is 100 mm wide and 5 mm thick were bolted on the tubing so as to be firmly attached with the holes, and the joint part was sealed with heat. The aforementioned bolting the synthetic pulps and heat sealing were repeated three times so that synthetic pulps were firmly attached each other to prepare the cylindrical synthetic pulps which are 48 mmϕ in a diameter (including the outer diameter of the polyethylene tubing) and 100 mm wide on the polyethylene tubing. After one of the ends of the polyethylene tubing was connected to the liquid supply tank filled with the nutrient solution (the composition is shown in Table 18) via a connection valve and the other end of the polyethylene tubing was closed, a hole with a size of 20 mm × 20 mm × 10 mm (in depth) was formed in the surface of the synthetic pulps and the strawberry nursery was transplanted in the hole. The liquid supply tank was placed on the surface of soils, the polyethylene tubing was buried so that the synthetic pulps was placed at a depth of 5 cm from the soil surface, and the nutrient solution was supplied from the liquid supply tank to the polyethylene tubing by opening the connection valve. The nutrient solution was in appropriate timing replenished into the liquid supply tank in order to observe the growth of strawberry at 20 to 30°C under natural light in a glass greenhouse. The results of the growth and the nutrient solution consumption are shown in Table 55.
[Table 55]

**Table 55 Results of Strawberry Growth and Nutrient Solution Consumption (transplanted on October 29, 2012)**

| | | | | | |
|---|---|---|---|---|---|
| Days after Seeding (days) | 11 | 18 | 29 | 36 | 44 |
| Height of Plants (mm) | 8 | 23 | 23 | 23 | 33 |
| Number of Leaves (pieces) | 3 | 3 | 6 | 9 | 9 |
| Integrated Nutrient Solution Consumption (mL) | 200 | 400 | | 600 | |
| Days after Seeding (days) | 52 | 59 | 67 | 74 | 81 |
| Height of Plants (mm) | 43 | 53 | 53 | 53 | 53 |
| Number of Leaves (pieces) | 12 | 15 | 16 | 18 | 18 |
| Integrated Nutrient Solution Consumption (mL) | 800 | | | | 1,000 |

### (Example 53)

A suspension of synthetic pulps (SWP (registered trade mark): E400, manufactured by Mitsui Chemicals, Inc.) in water was fixed by a pressed dewatering concentration on the surface of a commercially available polyethylene tubing which is 15 mmϕ in an inner diameter and 18 mmϕ in an outer diameter and has liquid supply holes on the tubing in order to prepare a cylindrical synthetic pulp which is 60 mmϕ in a diameter (including the outer diameter of the polyethylene tubing) and 100 mm wide on the polyethylene tubing. After one of the ends of the polyethylene tubing was connected to the liquid supply tank filled with a nutrient solution (the composition is shown in Table 18) via a connection valve and the other end of the polyethylene tubing was closed, a hole with a size of 20 mm × 20 mm × 10 mm (in depth) was formed on the surface of the synthetic pulps, and wheat seeds were put in the hole. The liquid supply tank was placed on the surface of soils, the polyethylene tubing was buried so that the synthetic pulps was plaved at a depth of 5 cm from the soil surface, and the nutrient solution was supplied from the liquid supply tank to the polyethylene tubing by opening the connection valve. The nutrient solution was in appropriate timing replenished into the liquid supply tank in order to observe the growth of wheat at 20 to 30°C under natural light in a glass greenhouse. The results of the growth, the nutrient solution consumption and the yield are shown in Table 56.
[Table 56]

**Table 56 Results of Wheat Growth, Nutrient Solution Concentration and Yield (seeded on November 13, 2012)**

| | | | | | |
|---|---|---|---|---|---|
| Days after Seeding (days) | 7 | 14 | 22 | 31 | 45 |
| Height of Plants (mm) | 85 | 230 | 282 | 472 | 602 |
| Number of Active Tillers (pieces) | 1 | 2 | 2 | 6 | 9 |
| Integrated Nutrient Solution Concentration (mL) | 600 | 1,000 | 1,800 | 3,000 | 3,800 |
| Days after Seeding (days) | 55 | 62 | 73 | 81 | 90 |
| Height of Plants (mm) | 728 | 732 | 759 | 759 | |
| Number of Active Tillers (pieces) | 16 | 18 | 18 | 18 | |
| Integrated Nutrient Solution Concentration (mL) | 4,200 | 4,600 | 4,800 | 5,500 | |
| Yield (g/seed) | | | | | 1.3 |

### (Example 54)

A triangle pole form of synthetic pulps was prepared by stacking three sheets with a size of 50 mm × 700 mm prepared from synthetic pulps (SWP (registered trade mark): E400, manufactured by Mitsui Chemicals, Inc.) pressed into the sheet form which is 5 mm thick so that each 700 mm long edge was firmly attached each other, a porous tubing, manufactured by KAKUDAI MFG. Co., Ltd., which is 15 mmϕ in an inner diameter, 21 mmϕ in an outer diameter and 1 m long was inserted into the triangle pole form of synthetic pulps, and the synthetic pulps were fixed by insulation lock bands so that each sheet form of synthetic pulps was firmly attached with the porous tubing to prepare a triangle pole form of plant cultivation kit. Moreover, a cuboid with a size of 250 mm × 500 mm × 50 mm (in height) was prepared by stacking the aforementioned sheet form of synthetic pulps so as to be firmly attached each other, the aforementioned porous tubing which is 15 mmϕ in an inner diameter, 21 mmϕ in an outer diameter and 1 m long was in horizontal passed through the cuboid, and the synthetic pulps were fixed by insulation lock bands so that the synthetic pulps were firmly attached with the porous tubing to prepare a square form of plant cultivation kit. Furthermore, two cuboids with each size of 80 mm × 700 mm × 15 mm (in height) was prepared by stacking the aforementioned sheet form of synthetic pulps so as to be firmly attached, the aforementioned porous tubing which is 15 mmϕ in an inner diameter, 21 mmϕ in an outer diameter and 1 m long was sandwiched with the two cuboids of synthetic pulps, and the synthetic pulps are fixed with the porous tubing by insulation lock bands so that the synthetic pulps were firmly attached with the porous tubing to prepare a sandwich type of plant cultivation kit.

After 8 m of commercially available polyvinyl chloride tubing was connected to the liquid supply tank filled with a nutrient solution (the composition is shown in Table 18) via an electromagnetic valve, 14 triangle pole plant cultivation kits were sequentially connected in a part of 8 to 24 m from the liquid supply tank, 19 square form of plant cultivation kits were then sequentially connected in a part of 25 to 45 m from the liquid supply tank, and a single sandwich type of plant cultivation kit was finally connected in a part of 46 to 47 m from the liquid supply tank. 8 burdock seeds were put on the top of one of the 14 triangle pole of plant cultivation kits, 10 carrot seeds were put on the top of one of the 14 triangle pole of plant cultivation kits, and 6 turnip seeds were put on each of the top of 12 of the 14 triangle pole of plant cultivation kits. 15 wheat seeds were put on each of the top of 17 of the 19 square form of plant cultivation kits and 4 corn seeds were put on each of the top of 2 of the 19 square form of plant cultivation kits after a hole with a size so as to receive the seeds were formed on each of the upper surface of the kits. A part of 150 mm from a cleavage point of a nursery of sweet potato which is 300 mm long was transplanted between the synthetic pulp layers of the upper part of the synthetic pulps.

The other end of the porous tubing was connected to a drainage water storage tank in order to temporarily store the nutrient solution not to be transferred to the synthetic pulps in the storage tank and then to return to the liquid supply tank for reuse. All of the aforementioned synthetic pulps were covered with mountain sands in a thickness of 3 cm in order to observe each of the growth at 10 to 45°C, a humidity of 30 to 50% and under natural light in a glass greenhouse. The results of each of the growth is shown in Table 57.
[Table 57]

**Table 57 Result of Growth (seeded on October 3, 2012)**

| Days after Seeding (days) | | 11 | 25 | 46 | 60 | 74 |
|---|---|---|---|---|---|---|
| Burdock | Average Height of Plants (mm) | 12 | 35 | 57 | 70 | 79 |
| | Average Number of Leaves (pieces) | 2.0 | 2.7 | 3.4 | 4.2 | 4.5 |
| Carrot | Average Height of Plants (mm) | 14 | 54 | 141 | 183 | 225 |
| | Average Number of Leaves (pieces) | 3.0 | 3.8 | 4.5 | 6.0 | 7.5 |
| Turnip | Average Height of Plants (mm) | 25 | 80 | 127 | 205 | 298 |
| | Average Number of Leaves (pieces) | 2.8 | 4.5 | 5.7 | 7.6 | 8.4 |
| Wheat | Average Height of Plants (mm) | 65 | 160 | 301 | 396 | 500 |
| | Average Number of Leaves (pieces) | 2.5 | 3.2 | 5.8 | 8.2 | 9.5 |
| Corn | Average Height of Plants (mm) | 42 | 99 | 207 | 412 | 493 |
| | Average Number of Leaves (pieces) | 1.5 | 2.0 | 2.4 | 3.4 | 6.0 |
| Sweet potato | Average Height of Plants (mm) | 183 | 364 | 776 | 1,033 | 1,267 |
| | Average Number of Leaves (pieces) | 16 | 29 | 53 | 60 | 60 |

The plants that can be cultivated in the same manner as in Examples 1, 2, 16, 23, 24, 30, 31, 35, 37, 39, 40, 43, 48, 50, 52, 53 and 54 are shown in Table 58; but not limited to these.
[Table 58]

**Table 58 (1) Plant List**

| Family | Genus | Species | Plant Name |
|---|---|---|---|
| Malvaceae | *Gossypium* | | Cotton |
| | *Hibiscus* | *H. cannabinus* | Kenaf |
| | | | Hibiscus |
| | *Abelmoschus* | *A. esculentus* | Okra |
| Chenopodiaceae | *Spinacia* | *S. oleracea* | Spinach |
| | *Beta* | *B. vulgaris* | Sugar Beet |
| Rubiaceae | *Gardenia* | *G. jasminoides* | Common Gardenia |
| | *Coffea* | | Coffee Tree |
| Brassicaceae | *Brassica* | *B. napus* | Rapeseed |
| | | *B. oleracea* | Broccoli |
| | | | Cabbage |
| | | *rapa* | Turnip |
| | | *R. sativus* | Leaf Mustard |
| | *Raphanus* | *B*. *juncea* | Japanese Radish |
| Iridaceae | *Crocus* | | Crocus |
| Poaceae | *Zea* | *Z. mays* | Corn |
| | *Oryza* | *O. sativa* | Rice |
| | *Sorghum* | *S. bicolor* | Sorghum |
| | *Triticum* | | Wheat |
| | *Hordeum* | *H. vulgare* | Barley |
| | *Zoysia* | | Zoysia |
| Araliaceae | *Eleutherococcus* | | Siberian Ginseng |
| | *Schefflera* | *S. arbolicola* | Schefflera |
| | *Panax* | *P. ginseng* | Asian Ginseng |
| Cucurbitaceae | *Cucumis* | *C. melo* | Melon |
| | | *C. sativus* | Cucumber |
| | *Cucurbita* | | Pumpkin |
| Anacardiaceae | *Toxicodendron* | *T. vernicifluum* | Lacquer tree |
| | *Mangifera* | *M. indica* | Mango |
| Ebenaceae | *Diospiros* | *D. kaki* | Persimmon |
| Oxalidaceae | *Averrhoa* | *A. carambola* | Star Fruit |

[Table 59]

**Table 58 (2) Plant List**

| Family | Genus | Species | Plant Name |
|---|---|---|---|
| Asteraceae | *Lactuca* | *L. sativa* | Lettuce |
| | *Chrysanthemum* | *C. morifolium* | Florists' Daisy |
| | *Glebionis* | *G. coronarium* | Crown Daisy |
| | *Carthamus* | *C. tinctorius* | Safflower |
| | *Helianthus* | *H. annuus* | Sunflower |
| | *Zinnia* | | Zinnia Elegans |
| Apocynaceae | *Catharanthus* | *C. roseus* | Madagascar Periwinkle |
| Ranunculaceae | *Nigella* | | Fennelflower |
| | *Aconitum* | | Monkshood |
| | *Coptis* | *C. japonica* | Coptis |
| Lauraceae | *Cinnamomum* | *C. camphora* | Camphor Laurel |
| | | *C. zeylanicum* | Cinnamon |
| Moraceae | *Ficus* | *F. carica* | Fig Tree |
| | | *F. elastica* | Indian Rubber Tree |
| Papaveraceae | *Papaver* | *P. somniferum* | Opium Poppy |
| | | *P. rhoeas* | Corn Poppy |
| Strelitziaceae | *Strelitzia* | | Bird of Paradise |
| Piperaceae | *Piper* | *P. nigrum* | Pepper |
| Araceae | *Amorphophallus* | *A. konjac* | Amorphophallus Konjac |
| | *Colocasia* | *C. esculenta* | Eddoe |
| Lamiaceae | *Perilla* | *P. frutescens* | Red Shiso |
| | *Ocimum* | *O. basilicum* | Basil |
| Zingiberaceae | *Zingiber* | *Z. officinale* | Ginger |
| | *Curcuma* | *C. longa* | Turmeric |
| Apiaceae | *Bupleurum* | *B. stenophyllum* | Bupleurum Scorzonerifolium |
| | *Apium* | *A. graveolens* | Celery |
| | *Daucus* | *D. carota* | Carrot |
| | *Coriandrum* | *C. sativum* | Coriander |
| Meliaceae | *Azadirachta* | *A. indica* | Neem |
| Polygonaceae | *Fagopyrum* | *F. esculentum* | Buckwheat |
| | *Rheum* | | Rhubarb |
| Ericaceae | *Vaccinium* | *Cyanococcus* | Blueberry |
| | *Pieris* | *P. japonica* | Japanese Andromeda |

[Table 60]

**Table 58 (3) Plant List**

| Family | Genus | Species | Plant Name |
|---|---|---|---|
| Passifloraceae | *Passiflora* | *edulis* | Passion Fruit |
| Euphorbiaceae | *Ricinus* | *R. communis* | Castor Bean |
| | *Manihot* | *M. esculenta* | Cassava |
| | *Hevea* | *H. brasiliensis* | Para Rubber Tree |
| Eucommiaceae | *Eucommia* | *E. ulmoides* | Eucommia Ulmoides Oliver |
| Solanaceae | *Solanum* | *melongena* | Eggplant |
| | | *S. tuberosum* | Potato |
| | | *S*. *lycopersicum* | Tomato |
| | *Nicotiana* | *N. tabacum* | Tobacco |
| | *Datura* | *D. metel* | Angel's Trumpet |
| Caryophyllaceae | *Dianthus* | *D. caryophyllus* | Carnation |
| | | *D. supperbus* | Dianthus |
| Alliaceae | *Allium* | *A. cepa* | Onion |
| Mimosoideae | *Albizia* | *A. julibrissin* | Silk Tree |
| | *Acacia* | | Gum Arabic |
| Musaceae | *Musa* | | Banana |
| Rosaceae | *Amygdalus* | *A. persica* | Peach |
| | *Fragaria* | | Strawberry |
| | *Malus* | *M. pumila* | Apple |
| | *Pyrus* | *P. communis* | European Pear |
| | | *P. pyrifolia* | Pear |
| | *Prunus* | | Cherry |
| | | *P. mume* | Japanese Apricot |
| | | *P. dulcis* | Almond |
| Bromeliaceae | *Ananas* | *A. comosus* | Pineapple |
| Caricaceae | *Carica* | *P*. *papaya* | Papaya |
| Amaryllidaceae | *Allium* | *A. cepa* | Onion |
| | *Allium* | *A. sativum* | Garlic |
| Convolvulaceae | *Ipomoea* | *I. batatas* | Sweet Potato |
| Myrtaceae | *Eucalyptus* | | Eucalyptus |

[Table 61]

**Table 58 (4) Plant List**

| Family | Genus | Species | Plant Name |
|---|---|---|---|
| Vitaceae | *Vitis* | | Grape |
| Fagaceae | *Quercus* | *Q. acutissima* | Sawtooth Oak |
| | | *Q. suber* | Cork Oak |
| | *Castanea* | *C. crenata* | Japanese Chestnut |
| Paeoniaceae | *Paeonia* | *P. lactiflora* | Peony |
| Ephedraceae | *Ephedra* | *E. sinica* | Ephedra Sinica |
| Actinid iaceae | *Actinidia* | *A. chinensis* | Kiwi Fruit |
| Fabaceae | *Pisum* | *P. sativum* | Pea |
| | *Glycine* | *G*. max | Soybean |
| Rutaceae | *Poncirus* | *P. trifoliata* | Hardy Orange |
| | *Citrus* | *C. unshiu* | Citrus Unshiu |
| | | *C. sinensis* | Orange |
| | | *C. limon* | Lemon |
| Boraginaceae | *Myosotis* | *M. scorpioides* | Myosotis |
| Berberidaceae | *Nandina* | *N. domestica* | Heavenly Bamboo |
| Oleaceae | *Olea* | *O. europaea* | Olive |
| | *Jasminum* | | Jasmine |
| Arecaceae | *Phoenix* | *P. dactylifera* | Manila palm |
| Boraginaceae | *Myosotis* | *M. scorpioides* | Myosotis |
| Berberidaceae | *Nandina* | *N. domestica* | Heavenly Bamboo |
| Oleaceae | *Olea* | *O. europaea* | Olive |
| | *Jasminum* | | Jasmine |
| Arecaceae | *Phoenix* | *P. dactylifera* | Manila palm |
| Salicaceae | *Salix* | | Willow |
| | *Populus* | *P. nigra* | Lombardy Poplar |
| Dioscoreaceae | *Dioscorea* | *D. japonica* | Japanese Yam |
| Saxifragaceae | *Hydrangea* | *H. serrata* | Sweet Hydrangea Leaf |
| Liliaceae | *Asparagus* | | Asparagus |
| | *Lilium* | | Lily |
| | *Liriope* | *L. muscari* | Liriope |

### (Example 55)

Synthetic pulps (SWP (registered trademark): E400, manufactured by Mitsui Chemicals, Inc.) pressed into the sheet form which is 5 mm thick were stacked so as to be firmly attached each other to prepare a cube with a size of 100 mm × 100 mm × 100 mm (in height). The cube was then floated on the liquid surface of a nutrient solution (the composition is shown in Table 18) poured into a cultivation case to allow the nutrient solution to penetrate into the synthetic pulps from the lower part of the synthetic pulps. After a hole with a size of 20 mm × 20 mm × 10 mm (in depth) was formed on the upper surface of the cube, a broad bean seed was put in the hole (seeded on May 31, 2012). Twenty two days after seeding, when the plant grew up to approximately 200 mm in height, *Aphis craccivora* was released to the plant, and seven days after the insect release, an aqueous solution of 10 mg of dinotefuran (an insecticide classified in neonicotinoids, manufactured by MITSUI CHEMICALS AGRO, INC.) dissolved in 1,000 mL of the nutrient solution was injected into the synthetic pulps by a syringe. The number of *Aphis craccivora* surviving in 4 days after injection of the aqueous solution was compared with the number of *Aphis craccivora* before injection of the aqueous solution in order to check the insecticidal efficacy of dinotefuran against *Aphis craccivora.* The results are shown in Table 59.
[Table 62]

**Table 59 Number of Surviving Aphis Craccivora**

| Days after Insect Release (days) | | 0 (before Insect Release) | 7 | 11 |
|---|---|---|---|---|
| Days after Dinotefuran Injection (days) | | | 0 | 4 |
| Number of Surviving Insects | Eggs | 0 | 7 | 0 |
| | Larvae | 0 | 129 | 0 |
| | Total (Eggs + Larvae) | 0 | 136 | 0 |

### (Example 56)

Synthetic pulps (SWP (registered trademark): E400, manufactured by Mitsui Chemicals, Inc.) pressed into the sheet form which is 5 mm thick were stacked so as to be firmly attached each other to prepare a cube with a size of 100 mm × 100 mm × 100 mm (in height). The cube was then floated on the liquid surface of a nutrient solution (the composition is shown in Table 18) poured into a cultivation case to allow the nutrient solution to penetrate into the synthetic pulps from the lower part of the synthetic pulps. A hole with a size of 20 mm × 20 mm × 10 mm (in depth) was formed on the upper surface of the cube, a broad bean seed was put in the hole (seeded on May 31, 2012). Twenty two days after seeding, when the plant grew up to approximately 200 mm in height, *Aphis craccivora* was released to the plant, and seven days after the insect release, an aqueous solution of 1.5 mg of dinotefuran (an insecticide classified in neonicotinoids, manufactured by MITSUI CHEMICALS AGRO, INC.) dissolved in 500 mL of the nutrient solution was mixed with the nutrient solution remaining in the cultivation case. The number of *Aphis craccivora* surviving in 4 days after mixing the aqueous solution was compared with the number of *Aphis craccivora* before mixing the aqueous solution in order to check the insecticidal efficacy of dinotefuran against *Aphis craccivora.* The results are shown in Table 60.
[Table 63]

**Table 60 Number of Surviving Aphis Craccivora**

| Days after Insect Release (days) | | 0 (before Insect Release) | 7 | 11 |
|---|---|---|---|---|
| Days after mixing Dinotefuran Solution (days) | | | 0 | 4 |
| Number of Surviving Insects | Eggs | 0 | 108 | 0 |
| | Larvae | 0 | 120 | 0 |
| | Total (Eggs + Larvae) | 0 | 228 | 0 |

### (Example 57)

Soybean was seeded in the same manner as in Example 45 (seeded on June 28, 2012), twenty days after seeding, when the eggs of greenhouse whitefly were observed on the back side of soybean leaves, an aqueous solution of 5 mg of dinotefuran (an insecticide classified in neonicotinoids, manufactured by MITSUI CHEMICALS AGRO, INC.) dissolved in 500 mL of the nutrient solution was mixed with the nutrient solution (500 mL) remaining in the liquid supply tank. The numbers of eggs of greenhouse whitefly in 30 days and 45 days after mixing the aqueous solution were compared with the number of eggs of greenhouse whitefly at the time when the aqueous solution was mixed in order to check the ovicidal efficacy of dinotefuran against the eggs of greenhouse whitefly. The results are shown in Table 61.
[Table 64]

**Table 61 Number of Eggs of Greenhouse Whitefly**

| | | | |
|---|---|---|---|
| Days after Seeding (days) | 20 | 30 | 45 |
| Days after mixing Dinotefuran Solution (days) | 0 | 10 | 25 |
| Number of Surviving Eggs | 15 | 0 | 0 |

### (Example 58)

Liquid supply holes were formed after an adhesive material was applied on the surface of a commercially available polyethylene tubing which is 15 mmϕ in an inner diameter and 18 mmϕ in an outer diameter, and a suspension of synthetic pulps (SWP (registered trade mark): E400, manufactured by Mitsui Chemicals, Inc.) in water was fixed by a pressed dewatering concentration on the surface of the polyethylene tubing in order to prepare the cylindrical synthetic pulps which are 58 mmϕ in a diameter (including the outer diameter of the polyethylene tubing) and 100 mm wide on the polyethylene tubing. After one of the ends of the polyethylene tubing was connected to the liquid supply tank filled with a nutrient solution (the composition is shown in Table 2), a hole which is 20 mmϕ in a diameter and 10 mm deep was formed on the upper surface of the cylindrical synthetic pulps, and then pansy seeds were put in the hole in order to observe the growth of pansy under the following conditions: an ambient temperature of 21 ± 3°C, a humidity of 55 ± 15%, an illuminance of 12,000 lux for 9.5 hours per day. The results of the growth and the nutrient solution consumption are shown in Table 62.
[Table 65]

**Table 62 Results of Pansy Growth and Nutrient Solution Consumption (seeded on December 16, 2013)**

| | | | | | | |
|---|---|---|---|---|---|---|
| Days after Seeding (days) | 8 | 14 | 30 | 49 | 63 | 71 |
| Height of Plants (mm) | 10 | 35 | 55 | 65 | 115 | 220 |
| Number of Leaves (pieces) | 2 | 6 | 10 | 12 | 16 | 18 |
| Growth Stage | Germination | | | | Blooming of Flower | |
| Integrated Nutrient Solution Consumption (mL) | | 50 | | 100 | 150 | 200 |

### (Example 59)

A triangle pole form of synthetic pulps was prepared by stacking three sheets with a size of 50 mm × 500 mm prepared by synthetic pulps (SWP (registered trade mark): E400, manufactured by Mitsui Chemicals, Inc.) pressed in the sheet form which is 5 mm thick so that each 500 mm long edge was firmly attached each other, a porous tubing, manufactured by KAKUDAI MFG. Co., Ltd., which is 15 mmϕ in an inner diameter and 21 mmϕ in an outer diameter, was inserted into the triangle pole form of synthetic pulps, and the synthetic pulps were fixed by insulation lock bands so that each sheet form of the synthetic pulps was firmly attached with the porous tubing. One of the ends of the porous tubing was connected to the liquid supply tank filled with a nutrient solution (the composition is shown in Table 18) via an electromagnetic valve in order to sequentially supply the nutrient solution to the porous tubing, and the other end of the porous tubing was connected to a drainage water storage tank in order to temporarily store the nutrient solution not transferred to the synthetic pulps in the storage tank and then to return to the liquid supply tank for reuse. A seed tuber of Chinese yam was put on the top of the triangle pole form of synthetic pulps, and the synthetic pulps were covered with mountain sands in a thickness of 2 cm in order to observe the growth of Chinese yam under the following conditions: an ambient temperature of 10 to 25°C, a humidity of 30 to 50% under natural light in a glass greenhouse. The result of the growth is shown in Table 63.
[Table 66]

**Table 63 Result of Chinese yam Growth (put on April 9, 2013)**

| | | | | |
|---|---|---|---|---|
| Days after Putting (days) | 41 | 72 | 82 | 108 |
| Height of Plant (mm) | 700 | 1,000 | 1,150 | 2,200 |
| Number of Leaves (pieces) | 6 | 23 | 31 | 63 |
| Harvested Weight (g) | | | | 62 |

### (Examples 60 to 64)

Seed tubers of potato, eddo, sweet potato, yam and ginger were put on the triangle pole form of synthetic pulps in the same manner as in Example 59 in order to observe each of the growth. The result of the growth is shown in Tables 64 to 68.
[Table 67]

**Table 64 Result of Potato Growth (put on September 20, 2013)**

| | | | | |
|---|---|---|---|---|
| Days after Putting (days) | 14 | 35 | 44 | 83 |
| Height of Plant (mm) | 10 | 120 | 326 | 390 |
| Number of Leaves (pieces) | 1 | 16 | 75 | 90 |
| Harvested Weight (g) | | | | 145 |

[Table 68]

**Table 65 Result of Eddo Growth (put on April 9, 2013)**

| | | | | |
|---|---|---|---|---|
| Days after Putting (days) | 19 | 37 | 108 | 144 |
| Height of Plant (mm) | 100 | 580 | 950 | 1,050 |
| Number of Leaves (pieces) | 2 | 4 | 5 | 7 |
| Harvested Weight (g) | | | | 65 |

[Table 69]

**Table 66 Result of Sweet Potato Growth (put on April 9, 2013)**

| | | | | |
|---|---|---|---|---|
| Days after Putting (days) | 33 | 55 | 82 | 108 |
| Height of Plant (mm) | 152 | 800 | 1,150 | 2,200 |
| Number of Leaves (pieces) | 5 | 26 | 31 | 63 |
| Harvested Weight (g) | | | | 505 |

[Table 70]

**Table 67 Result of Yam Growth (put on April 9, 2013)**

| | | | | |
|---|---|---|---|---|
| Days after Putting (days) | 27 | 36 | 55 | 102 |
| Height of Plant (mm) | 230 | 260 | 710 | 1,200 |
| Number of Leaves (pieces) | 5 | 26 | 71 | 43 |
| Harvested Weight (g) | | | | 103 |

[Table 71]

**Table 68 Result of Ginger Growth (put on May 6, 2013)**

| | | | | |
|---|---|---|---|---|
| Days after Putting (days) | 40 | 55 | 81 | 117 |
| Height of Plant (mm) | 570 | 1,200 | 1,220 | 1,350 |
| Number of Leaves (pieces) | 3 | 5 | 12 | 18 |
| Harvested Weight (g) | | | | 96 |

### (Example 65)

Liquid supply holes were formed on a commercially available polyethylene tubing which is 15 mmϕ in an inner diameter and 18 mmϕ in an outer diameter, synthetic pulps (SWP (registered trade mark): E400, manufactured by Mitsui Chemicals, Inc.) pressed into the sheet form which is 100 mm wide and 20 mm thick were bolted so as to be firmly attached with the holes, and the joint part was sealed with heat in order to prepare a cylindrical synthetic pulp which is 58 mmϕ in a diameter (including the outer diameter of the polyethylene tubing) and 100 mm wide on the polyethylene tubing. One of the ends of the polyethylene tubing was connected to the liquid supply tank filled with a nutrient solution (the composition is shown in Table 18) via an electromagnetic valve in order to sequentially supply the nutrient solution to the polyethylene tubing, and the other end of the polyethylene tubing was connected to a drainage water storage tank in order to temporarily store the nutrient solution not to be transferred to the cylindrical synthetic pulp in the storage tank and then to return to the liquid supply tank for reuse. A hole on the upper surface of the synthetic pulp, a hole which is 20 mmϕ in a diameter and 10 mm wide was formed, and turnip seeds were put in the hole. The synthetic pulps were covered with mountain sands in a thickness of 2 cm in order to observe the growth of turnip under the following conditions: an ambient temperature of 10 to 25°C, a humidity of 30 to 50% under natural light in a glass greenhouse. The result of the growth is shown in Table 69.
[Table 72]

**Table 69 Result of Turnip Growth (seeded on October 15, 2013)**

| | | | | | |
|---|---|---|---|---|---|
| Days after Seeding (days) | 8 | 38 | 71 | 113 | 131 |
| Height of Plants (mm) | 5 | 30 | 218 | 239 | 250 |
| Number of Leaves (pieces) | 2 | 2 | 4 | 8 | 11 |
| Harvested Weight (g) | | | | | 290 |

### (Example 66)

Japanese radish was seeded in the same manner as in Example 65 in order to observe the growth. The result of the growth is shown in Table 70
[Table 73]

**Table 70 Results of Japanese Radish Growth (seeded on October 15, 2013)**

| | | | | | |
|---|---|---|---|---|---|
| Days after Seeding (days) | 8 | 38 | 71 | 85 | 120 |
| Height of Plants (mm) | 5 | 30 | 295 | 728 | 782 |
| Number of Leaves (pieces) | 2 | 2 | 6 | 12 | 20 |
| Harvested Weight (g) | | | | | 814 |

### (Example 67)

A suspension of synthetic pulps (SWP (registered trade mark): E400, manufactured by Mitsui Chemicals, Inc.) in water was fixed by a pressed dewatering concentration on the liquid supply holes formed at the intervals of 40 cm on the polyvinyl chloride tubing which is 15 mmϕ in an inner diameter and 18 mmϕ in an outer diameter in order to prepare two lengths of the polyvinyl chloride tubing having 40 cylindrical synthetic pulps which were 60 mmϕ in a diameter (including outer diameter of the polyvinyl chloride tubing) and 100 mm wide (having no synthetic pulp fixed on the part of 2 m from each end of the polyvinyl chloride tubing) at the same interval. A liquid supply pump (Minute 10, manufactured by Sataco) was connected to one of the ends of each tubing, and the other ends of each tubing were respectively connected to the nozzles for liquid supply and liquid receiving on a liquid supply tank via connection valves.

A corn seed was put in a hole formed with a size of 20 mmϕ in a diameter × 10 mm deep on the upper surface of a cylindrical synthetic pulp, the liquid supply tank and the liquid supply pump were placed on the surface of soils, and the polyvinyl chloride tubing was buried so that the cylindrical synthetic pulps were placed at a depth of 5 cm from the soil surface.

After the connection valves were opened, a nutrient solution (the composition is shown in Table 18) was circulated between in the liquid-supply tank and in the polyvinyl chloride tubing by the liquid supply pump in order to control the flow of the nutrient solution at a rate between 50 and 100 mL/min.

The growth of corn was observed under the following conditions: an ambient temperature of 20 to 30°C, under natural light in a trial field having a roof (seeded on May 21, 2013). The results of the growth, the nutrient solution consumption, the yield and the sugar content after harvesting are shown in Table 71.

Note that the nutrient solution in the liquid supply tank was prepared by diluting a 10 times concentrated nutrient solution with 10 times volume of water in the liquid supply tank, and the nutrient solution was in appropriate timing replenished in the same preparation method. Furthermore, the sugar content was measured by a handy refractometer IATC-1 E (Brix 0 to 32%) manufactured by luchi Seieido Co., Ltd.
[Table 74]

**Table 71 Results of Corn Growth, Nutrient Solution Consumption, Yield and Sugar Content after Harvesting**

| | | | | | | |
|---|---|---|---|---|---|---|
| Days after Seeding (days) | 5 | 20 | 35 | 50 | 60 | 70 |
| Height of Plants (mm) | Germination | 679 | 1,226 | 1,465 | 1,490 | |
| Integrated Nutrient Solution Consumption (L) | 40 | 82 | 125 | 255 | 268 | |
| Average Yield (g/plant) | | | | | | 350 |
| Average Sugar Content (Brix, %) | | | | | | 16.9 |

### (Example 68)

A suspension of synthetic pulps (SWP (registered trade mark): E400, manufactured by Mitsui Chemicals, Inc.) in water was fixed by a pressed dewatering concentration on the liquid supply holes formed at the intervals of 40 cm on a polyvinyl chloride tubing which is 15 mmϕ in an inner diameter and 18 mmϕ in an outer diameter, and the tubing on which synthetic pulps were fixed was placed in a dryer heated at 140°C for 5 minutes after naturally dried in order to prepare two lengths of polyvinyl chloride tubing having 40 cylindrical synthetic pulps which were 60 mmϕ in a diameter (including the outer diameter of the polyvinyl chloride tubing) and 100 mm wide (having no synthetic pulps fixed on the part of 2 m from each end of the polyvinyl chloride tubing) at the same interval. A liquid supply pump (Minute 10, manufactured by Sataco) was connected to one of the ends of each tubing, and the other ends of each tubing were respectively connected to the nozzles for liquid supply and liquid receiving on a liquid supply tank via connection valves.

A corn seed was put in a hole formed with a size of 20 mmϕ in a diameter × 10 mm deep on the upper surface of a cylindrical synthetic pulp and a sheet of PVA film was bolted so as to cover the surface of the cylindrical synthetic pulp. After the liquid supply tank and the liquid supply pump were placed on the surface of soils, the polyvinyl chloride tubing was buried so that the cylindrical synthetic pulps were placed at a depth of 5 cm from the soil surface.

After the connection valves were opened, a nutrient solution (the composition is shown in Table 18) was circulated between in the liquid supply tank and in the polyvinyl chloride tubing by the liquid supply pump in order to control the flow of the nutrient solution at a rate between 50 and 100 mL/min.

The growth of corn was observed under the following conditions: an ambient temperature of 20 to 30°C, under natural light in a trial field having a roof (seeded on May 21, 2013). The results of the growth, the nutrient solution consumption, the yield and the sugar content after harvesting are shown in Table 72.

Note that the nutrient solution in the liquid-supply tank was prepared by diluting a 10 times concentrated nutrient solution with 10 times volume of water in the liquid-supply tank, and the nutrient solution was in appropriate timing replenished in the same preparation method. Furthermore, the sugar content was measured by a handy refractometer IATC-1 E (Brix 0 to 32%) manufactured by luchi Seieido Co., Ltd.
[Table 75]

**Table 72 Results of Corn Growth, Nutrient Solution Consumption, Yield and Sugar Content after Harvesting**

| | | | | | | |
|---|---|---|---|---|---|---|
| Days after Seeding (days) | 5 | 20 | 35 | 50 | 60 | 70 |
| Height of Plants (mm) | Germination | 642 | 1,089 | 1,412 | 1,435 | |
| integrated Nutrient Solution Consumption (L) | 37 | 78 | 117 | 245 | 255 | |
| Average Yield (g/plant) | | | | | | 340 |
| Average Sugar Content (Brix, %) | | | | | | 16.2 |

### (Example 69)

A suspension of natural pulps (LBKP (Laubholz Bleached Kraft Pulp) manufactured by TOKAI PULP & PAPER Co., Ltd.) in water was fixed by a pressed dewatering concentration on the liquid supply holes formed at the intervals of 40 cm on the polyvinyl chloride tubing which is 15 mmϕ in an inner diameter and 18 mmϕ in an outer diameter in order to prepare the polyvinyl chloride tubing having 40 cylindrical natural pulps which were 60 mmϕ in a diameter (including the outer diameter of the polyvinyl chloride tubing) and 100 mm wide (having no natural pulp fixed on the part of 2 m from each end of the polyvinyl chloride tubing) at the same interval. Each end of the tubing was respectively connected via connection valves to the nozzles for liquid supply and liquid receiving on the liquid supply tank in which a liquid supply pump (Minute 10, manufactured by Sataco) and a pressure control equipment manufactured by Asahi Enterprise were set.

A corn seed was put in a hole formed with a size of 20 mmϕ in a diameter × 10 mm deep on the upper surface of a cylindrical natural pulp, the liquid supply tank was placed on the surface of soils, and the polyvinyl chloride tubing was buried so that the cylindrical natural pulps were placed at a depth of 5 cm from the soil surface.

After the connection valves were opened, a nutrient solution (the composition is shown in Table 18) was circulated between in the liquid supply tank and in the vinyl chloride tubing by the liquid supply pump in order to control the flow of the nutrient solution at a rate between 50 and 100 mL/min., and the pressure in the polyvinyl chloride tubing was controlled by the pressure control equipment so as to keep the pressure between 0.0 and 9.9 mmH₂O.

The growth of corn was observed under the following conditions: an ambient temperature of 20 to 30°C, under natural light in a trial field having a roof (seeded on May 21, 2013). The results of the growth, the nutrient solution consumption, the yield and the sugar content after harvesting are shown in Table 73.

Note that the nutrient solution in the liquid-supply tank was prepared by diluting a 10 times concentrated nutrient solution with 10 times volume of water in the liquid supply tank, and the nutrient solution was in appropriate timing replenished in the same preparation method. Furthermore, the sugar content was measured by a handy refractometer IATC-1 E (Brix 0 to 32%) manufactured by luchi Seieido Co., Ltd.
[Table 76]

**Table 73 Results of Corn Growth, Nutrient Solution Consumption, Yield and Sugar Content after Harvesting**

| | | | | | | |
|---|---|---|---|---|---|---|
| Days after Seeding (days) | 5 | 20 | 35 | 50 | 60 | 70 |
| Height of Plants (mm) | Germination | 692 | 1,254 | 1,499 | 1,517 | |
| Integrated Nutrient Solution Consumption (L) | 40 | 85 | 126 | 262 | 270 | |
| Average Yield (g/plant) | | | | | | 353 |
| Average Sugar Content (Brix, %) | | | | | | 16.5 |

### (Example 70)

A suspension of a mixture (mixing ratio of natural pulps / synthetic pulps = 90 : 10) of natural pulps (LBKP (Laubholz Bleached Kraft Pulp) manufactured by TOKAI PULP & PAPER Co., Ltd.) and synthetic pulps (SWP (registered trade mark): E400, manufactured by Mitsui Chemicals, Inc.) in water was fixed by a pressed dewatering concentration on the liquid supply holes formed at the intervals of 40 cm on the polyvinyl chloride tubing which is 15 mmϕ in an inner diameter and 18 mmϕ in an outer diameter, and the tubing on which the mixture of natural pulps and synthetic pulps was fixed was placed in a dryer heated at 140°C for 5 minutes after naturally dried in order to prepare two lengths of the polyvinyl chloride tubing having 20 cylindrical mixtures of natural pulps and synthetic pulps which were 60 mmϕ in a diameter (including the outer diameter of the vinyl chloride tubing) and 100 mm wide (having no mixture of natural pulps and synthetic pulps fixed on the part of 2 m from each end of the polyvinyl chloride tubing) at the same interval. A liquid supply pump (Minute 10, manufactured by Sataco) was connected to one of the ends of each tubing, and the other ends of each tubing were respectively connected to the nozzles for liquid supply and liquid receiving on a liquid supply tank via connection valves.

A corn seed was put in a hole formed with a size of 20 mmϕ in a diameter × 10 mm deep on the upper surface of a cylindrical mixture of natural pulps and synthetic pulps, and a sheet of PVA film was bolted so as to cover the surface of the cylindrical mixture of natural pulps and synthetic pulps. After the liquid-supply tank and the liquid supply pump were placed on the surface of soils, the vinyl chloride tubing was buried so that the cylindrical mixture of natural pulps and synthetic pulps was placed at a depth of 5 cm from the soil surface.

After the connection valves were opened, a nutrient solution (the composition is shown in Table 18) was circulated between in the liquid supply tank and in the vinyl chloride tubing by the liquid supply pump in order to control the flow of the nutrient solution at a rate between 50 and 100 mL/min.

The growth of corn was observed under the following conditions: an ambient temperature of 20 to 30°C, under natural light in a trial field having a roof (seeded on May 21, 2013). The results of the growth, the nutrient solution consumption, and the yield and the sugar content after harvesting are shown in Table 74.

Note that the nutrient solution in the liquid-supply tank was prepared by diluting a 10 times concentrated nutrient solution with 10 times volume of water in the liquid supply tank, and the nutrient solution was in appropriate timing replenished in the same preparation method. Furthermore, the sugar content was measured by a handy refractometer IATC-1 E (Brix 0 to 32%) manufactured by luchi Seieido Co., Ltd.
[Table 77]

**Table 74 Results of Corn Growth, Nutrient Solution Consumption, Yield and Sugar Content after Harvesting**

| | | | | | | |
|---|---|---|---|---|---|---|
| Days after Seeding (days) | 5 | 20 | 35 | 50 | 60 | 70 |
| Height of Plants (mm) | Germination | 637 | 1,150 | 1,373 | 1,400 | |
| Integrated Nutrient Solution Consumption (L) | 37 | 75 | 116 | 237 | 248 | |
| Average Yield (g/plant) | | | | | | 326 |
| Average Sugar Content (Brix, %) | | | | | | 15.2 |

### (Example 71)

A suspension of a mixture (mixing ratio of natural pulps / synthetic pulps = 95 : 5) of natural pulps (LBKP (Laubholz Bleached Kraft Pulp) manufactured by TOKAI PULP & PAPER Co., Ltd.) and synthetic pulps (SWP (registered trade mark): E400, manufactured by Mitsui Chemicals, Inc.) in water was fixed by a pressed dewatering concentration on the liquid supply holes formed at the intervals of 40 cm on the polyvinyl chloride tubing which is 15 mmϕ in an inner diameter and 18 mmϕ in an outer diameter in order to prepare the polyvinyl chloride tubing having 40 cylindrical mixtures of natural pulps and synthetic pulps which were 60 mmϕ in a diameter (including the outer diameter of the polyvinyl chloride tubing) and 100 mm wide (having no mixtures of natural pulps and synthetic pulps fixed on the part of 2 m from each end of the polyvinyl chloride tubing) at the same interval. Each end of the tubing was respectively connected via connection valves to the nozzles for liquid supply and liquid receiving on the liquid supply tank in which a liquid supply pump (Minute 10, manufactured by Sataco) and a pressure control equipment manufactured by Asahi Enterprise) were set.

A corn seed was put in a hole formed with a size of 20 mmϕ in a diameter × 10 mm deep on the upper surface of a cylindrical mixture of natural pulps and synthetic pulps and a sheet of PVA film was bolted so as to cover the surface of the mixture of natural pulps and synthetic pulps. After the liquid supply tank was placed on the surface of soils, the vinyl chloride tubing was buried so that the mixture of natural pulps and synthetic pulps was placed at a depth of 5 cm from the soil surface.

After the connection valves were opened, a nutrient solution (the composition is shown in Table 18) was circulated between in the liquid supply tank and in the polyvinyl chloride tubing by the liquid supply pump in order to control the flow of the nutrient solution at a rate between 50 and 100 mL/min., and the pressure in the polyvinyl chloride tubing was controlled by the pressure control equipment so as to keep the pressure between 0.0 and 9.9 mmH₂O.

The growth of corn was observed under the following conditions: an ambient temperature of 20 to 30°C, under natural light in a trial field having a roof (seeded on May 21, 2013). The results of the growth, the nutrient solution consumption, the yield and the sugar content after harvesting are shown in Table 75.

Note that the nutrient solution in the liquid supply tank was previously prepared so as to be a practical concentration and then supplied to the liquid supply tank. The nutrient solution prepared so as to be the same concentration in the same preparation method was in appropriate timing replenished. Furthermore, the sugar content was measured by a handy refractometer IATC-1 E (Brix 0 to 32%) manufactured by luchi Seieido Co., Ltd.
[Table 78]

**Table 75 Results of Corn Growth, Nutrient Solution Consumption, Yield and Sugar Content after Harvesting**

| | | | | | | |
|---|---|---|---|---|---|---|
| Days after Seeding (days) | 5 | 20 | 35 | 50 | 60 | 70 |
| Height of Plants (mm) | Germination | 704 | 1,272 | 1,526 | 1,552 | |
| Integrated Nutrient Solution Consumption (L) | 42 | 86 | 132 | 268 | 285 | |
| Average Yield (g/plant) | | | | | | 363 |
| Average Sugar Content (Brix, %) | | | | | | 16.4 |

### (Example 72)

A suspension solution of a mixture of natural pulp (LBKP (Laubholz Bleached Kraft Pulp) manufactured by TOKAI PULP & PAPER Co., Ltd.) and synthetic pulp (SWP (registered trade mark): E400, manufactured by Mitsui Chemicals, Inc.) in water was fixed by a pressed dewatering concentration on the liquid supply holes formed at the intervals of 40 cm on the polyvinyl chloride tubing which is 15 mmϕ in an inner diameter and 18 mmϕ in an outer diameter in order to prepare the polyvinyl chloride tubing having 40 cylindrical mixtures of natural pulps and synthetic pulps which were 60 mmϕ in a diameter (including the outer diameter of the vinyl chloride tubing) and 100 mm wide (having no mixture of natural pulps and synthetic pulps fixed on the part of 2 m from each end of the polyvinyl chloride tubing) at the same interval. Each end of the tubing was respectively connected via connection valves to the nozzles for liquid supply and liquid receiving on the liquid supply tank in which a liquid supply pump (Beta 4b, manufactured by Prominent) and a pressure control valve (depressuring valve, manufactured by Tohkemy Corporation) were set.

A corn seed was put in a hole formed with a size of 20 mmϕ in a diameter × 10 mm deep on the upper surface of a cylindrical mixture of natural pulps and synthetic pulps, the liquid supply tank was placed on the surface of soils, and the polyvinyl chloride tubing was buried so that the cylindrical mixture of natural pulps and synthetic pulps was placed at a depth of 5 cm from the soil surface.

After the connection valves were opened, a nutrient solution (the composition is shown in Table 18) was circulated between in the liquid supply tank and in the vinyl chloride tubing by the liquid supply pump in order to control the flow of the nutrient solution at a rate between 50 and 100 mL/min., and the pressure in the polyvinyl chloride tubing was controlled by the pressure control equipment so as to keep the pressure between 0.0 and 9.9 mm H₂O.

The growth of corn was observed under the following conditions: an ambient temperature of 20 to 30°C, under natural light in a trial field having a roof (seeded on May 21, 2013). The results of the growth, the nutrient solution consumption, the yield and the sugar content after harvesting are shown in Table 76.

Note that the nutrient solution in the liquid supply tank was previously prepared so as to be a practical concentration and then supplied to the liquid supply tank. The nutrient solution prepared so as to be the same concentration in the same preparation method was in appropriate timing replenished. Furthermore, the sugar content was measured by a handy refractometer IATC-1 E (Brix 0 to 32%) manufactured by luchi Seieido Co., Ltd.
[Table 79]

**Table 76 Results of Corn Growth, Nutrient Solution Consumption, Yield and Sugar Content after Harvesting**

| | | | | | | |
|---|---|---|---|---|---|---|
| Days after Seeding (days) | 5 | 20 | 35 | 50 | 60 | 70 |
| Height of Plants (mm) | Germination | 722 | 1,300 | 1,552 | 1,582 | |
| Integrated Nutrient Solution Consumption (L) | 42 | 89 | 135 | 272 | 285 | |
| Average Yield (g/plant) | | | | | | 365 |
| Average Sugar Content (Brix, %) | | | | | | 16.8 |

### (Example 73)

A suspension of synthetic pulps (SWP (registered trade mark): E400, manufactured by Mitsui Chemicals, Inc.) in water was fixed by a pressed dewatering concentration on the liquid supply holes formed at the intervals of 20 cm on a polyvinyl chloride tubing which is 15 mmϕ in an inner diameter and 18 mmϕ in an outer diameter in order to prepare two lengths of polyvinyl chloride tubing having 80 cylindrical synthetic pulps which were 60 mmϕ in a diameter (including the outer diameter of the vinyl chloride tubing) and 100 mm wide (having no synthetic pulp fixed on the part of 2 m from each end of the polyvinyl chloride tubing) at the same interval. A liquid supply pump (Minute 10, manufactured by Sataco) was connected to one of the ends of each tubing, and the other ends of each tubing were respectively connected to the nozzles for liquid supply and liquid receiving on the liquid supply tank via connection valves.

A soybean seed was put in a hole with a size of 20 mmϕ in a diameter × 10 mm deep on the upper surface of a cylindrical synthetic pulp, the liquid supply tank was placed on the surface of soils, and the polyvinyl chloride tubing was buried so that the cylindrical synthetic pulp was placed at a depth of 5 cm from the soil surface.

After the connection valves were opened, a nutrient solution (the composition is shown in Table 18) was circulated between in the liquid supply tank and in the vinyl chloride tubing by the liquid supply pump in order to control the flow of the nutrient solution at a rate between 50 and 100 mL/min.

The growth of soybean was observed under the conditions: an ambient temperature of 20 to 30°C, under natural light in a trial field having a roof (seeded on June 11, 2013). The results of the growth, the nutrient solution consumption and yield after harvesting are shown in Table 77.

Note that the nutrient solution in the liquid supply tank was previously controlled so as to be a practical concentration and then supplied to the liquid supply tank. The nutrient solution prepared so as to be the same concentration in the same preparation method was in appropriate timing replenished.
[Table 80]

**Table 77 Results of Soybean Growth, Nutrient Solution Consumption and Yield after Harvesting**

| | | | | | | |
|---|---|---|---|---|---|---|
| Days after Seeding (days) | 8 | 14 | 24 | 35 | 59 | 110 |
| Height of Plants (mm) | 77 | 151 | 348 | 449 | 709 | |
| Integrated Nutrient Solution Consumption (L) | 59 | 68 | 111 | 145 | 259 | |
| Average Yield (g/plant) | | | | | | 380 |

### (Reference Example 1)

A ceramic (a hollow cylindrical ceramic with a size of 20 mmϕ in an inner diameter × 28 mmϕ in an outer diameter × 80 mm high) manufactured by Phytoculture Control Co., Ltd. was immersed in the liquid surface of a nutrient solution (the composition is shown in Table 2) poured into a cultivation case to allow the nutrient solution to penetrate into the ceramic from the lower part of the ceramic. Wheat seeds were put on the inner surface of the ceramic in order to observe the growth under the following conditions: an ambient temperature of 21 ± 3°C, a humidity of 55 ± 15%, an illuminance of 12,000 lux for 9.5 hours per day (seeded on January 6, 2012). The results of the growth and the nutrient solution consumption are shown in Table 78 in contrast to the results of Example 2.
[Table 81]

**Table 78 Comparison of Results of Wheat Growth and Nutrient Solution Consumption**

| Days after Seeding (days) | | 3 | 21 | 37 | 56 | 72 |
|---|---|---|---|---|---|---|
| Ceramic Cultivation | Height of Plants (mm) | Germination | 215 | 350 | 434 | 437 |
| | Number of Leaves (pieces) | | 3 | 5 | 9 | 10 |
| | Integrated Nutrient Solution Consumption (mL) | | | 641 | 1,342 | 2,166 |
| Example 2 | Height of Plants (mm) | 5 | 280 | 405 | 450 | 558 |
| | Number of Leaves (pieces) | 0 | 5 | 12 | 19 | 22 |
| | Integrated Nutrient Solution Consumption (mL) | | 28 | 183 | 333 | 555 |

### (Reference Example 2)

Wheat seeds were put on the surface of dry sands filled in a cultivation case and a nutrient solution (the composition is shown in Table 2) was supplied by use of a drip irrigation system made by a drip equipment manufactured by KAKUDAI MFG. Co., Ltd. and an electromagnetic valve manufactured by CKD Corporation in order to observe the growth under the following conditions: an ambient temperature of 21 ± 3°C, a humidity of 55 ± 15%, an illuminance of 12,000 lux for 9.5 hours per day (seeded on August 27, 2012). The results of the growth and the nutrient solution supply/consumption are shown in Table 79 in contrast to the results of Example 2.
[Table 82]

**Table 79 Comparison of Results of Wheat Growth and Nutrient Solution Supply/Consumption**

| Days after Seeding (days) | | 3 | 35 | 72 | 86 | 93 |
|---|---|---|---|---|---|---|
| Drip Irrigation | Height of Plants (mm) | Germination | 360 | 480 | 480 | Plant Death |
| | Integrated Nutrient Solution Supply (mL) | 300 | 3,800 | 6,100 | 6,800 | |
| Example 2 | Height of Plants (mm) | 5 | 390 | 558 | 638 | 661 |
| | Integrated Nutrient Solution Consumption (mL) | | 128 | 555 | 744 | 800 |

### (Reference Example 3)

Wheat seeds were put on a urethane material (a size of 30 mmϕ in a diameter × 15 mm high) fixed on a foamed material and floated on the nutrient solution (the composition is shown in Table 2) aerated at a rate of 2 L per minute by an air pump manufactured by Gellex equipped with an exhaust nozzle for bubbling in order to observe the wheat growth by a hydroponic culture under the conditions: an ambient temperature of 21 ± 3°C, a humidity of 55 ± 15%, an illuminance of 12,000 lux for 9.5 hours per day (seeded on August 27, 2012). The results of the growth and the nutrient solution consumption are shown in Table 80 in contrast to the results of Example 2.
[Table 83]

**Table 80 Comparison of Results of Wheat Growth and Nutrient Solution Consumption**

| Days after Seeding (days) | | 3 | 29 | 72 | 86 | 93 |
|---|---|---|---|---|---|---|
| Hydroponic culture | Height of Plants (mm) | Germination | 340 | 590 | 590 | 590 |
| | Integrated Nutrient Solution Consumption (mL) | | 550 | 4,975 | 8,625 | 9,625 |
| Example 2 | Height of Plants (mm) | 5 | 335 | 558 | 638 | 661 |
| | Integrated Nutrient Solution Consumption (mL) | | 72 | 555 | 744 | 800 |

### (Reference Example 4)

A urethane material (a size of 55 mmϕ in a diameter × 15 mm high) on which wheat seeds were put was set in a mist cultivation equipment (a cultivation equipment by use of misty aeroponic system) manufactured by Kyoto Net Sales, and a nutrient solution (the composition is shown in Table 2) was sprayed around the wheat roots as a mist cultivation in order to observe the growth under the following conditions: an ambient temperature of 21 ± 3°C, a humidity of 55 ± 15%, an illuminance of 12,000 lux for 9.5 hours per day (seeded on August 27, 2012, sprayed by 8 nozzles at a rate of 56 L/hour per nozzle). The results of the growth and the nutrient solution supply/consumption are shown in Table 81 in contrast to the results of Example 2.
[Table 84]

**Table 81 Comparison of Results of Wheat Growth and Nutrient Solution Supply/Consumption**

| Days after Seeding (days) | | 3 | 29 | 56 | 80 | 93 |
|---|---|---|---|---|---|---|
| Mist Cultivation | Height of Plants (mm) | Germination | 280 | 280 | 330 | 400 |
| | Integrated Nutrient Solution Supply (mL) | | 250 | 675 | 3,175 | 4,125 |
| Example 2 | Height of Plants (mm) | 5 | 335 | 450 | 600 | 661 |
| | Integrated Nutrient Solution Consumption (mL) | | 72 | 333 | 600 | 800 |

### (Reference Example 5)

Grape tomatoes were seeded in the same manners as those in Reference Example 1 and Reference Example 3 in order to measure the sugar content of the pulps of the grape tomatoes by a handy refractometer IATC-1 E (Brix 0 to 32%) manufactured by luchi Seieido Co., Ltd after the fruitions of the grape tomatoes. The results of sugar content measurement are shown in Table 82 in contrast to the result of Example 3.
[Table 85]

**Table 82 Comparison of measurement results of sugar content of Mini-tomato**

| Days after Seeding (days) | | 167 |
|---|---|---|
| Sugar Content (Brix, %) | Ceramic Cultivation | 10.0 |
| | Hydroponic Cultivation | 9.0 |
| | Example 3 | 14.0 |

### (Reference Example 6)

A wheat was seeded at a depth of 5 cm from the surface of soils, 300 mL per time of water was twice a day supplied to the soils, a nutrient solution (the composition is shown in Table 18) was in appropriate timing supplied as well, and appropriate agrochemical products were treated as well at the time when insects or diseases were observed in order to observe the growth of wheat at 20 to 30°C and under natural light in a glass greenhouse (seeded on February 10, 2012). The results of the growth, the nutrient solution supply/consumption and the yield are shown in Table 83 in contract to the results of Example 43.
[Table 86]

**Table 83 Comparison of Results of Wheat Growth, Nutrient Solution Supply/Consumption and Yield**

| Days after Seeding (days) | | 5 | 10 | 22 | 31 | 45 |
|---|---|---|---|---|---|---|
| Soil Cultivation | Height of Plants (mm) | 24 | 121 | 214 | 279 | 375 |
| | Integrated Nutrient Solution Supply (mL) | 300 | 1,100 | 2,300 | 3,200 | 5,000 |
| Example 43 | Height of Plants (mm) | 90 | 238 | 281 | 460 | 589 |
| | Integrated Nutrient Solution Consumption (mL) | 600 | 1,000 | 1,800 | 3,000 | 3,800 |
| Days after Seeding (days) | | 55 | 62 | 73 | 81 | 90 |
| Soil Cultivation | Height of Plants (mm) | 522 | 542 | 552 | 553 | |
| | integrated Nutrient Solution Supply (mL) | 5,900 | 6,400 | 7,200 | 7,300 | |
| | Yield (g/seed) | | | | | 0.8 |
| Example 43 | Height of Plants (mm) | 721 | 724 | 745 | 745 | |
| | Integrated Nutrient Solution Consumption (mL) | 4,200 | 4,600 | 4,800 | 5,500 | |
| | Yield (g/seed) | | | | | 1.3 |

### (Reference Examples 7 to 10)

Corn (seeded on March 28, 2012), soybean (seeded on June 28, 2012), cabbage (seeded on October 29, 2012) and grape tomato (seeded on October 29, 2012) were seeded in the same manner as that in Reference Example 6 in order to observe each of the growth. The results of the growth, the nutrient solution supply/consumption and the yield are shown in Table 84 to 87 in contrast to the results of Examples 44 to 47,respectively.
[Table 87]

**Table 84 Comparison of Results of Corn Growth and Nutrient Solution Supply/Consumption**

| Days after Seeding (days) | | 7 | 14 | 19 | 25 | 33 |
|---|---|---|---|---|---|---|
| Soil Cultivation | Height of Plants (mm) | 69 | 294 | 356 | 440 | 650 |
| | Integrated Nutrient Solution Supply (mL) | 200 | 400 | 500 | | 600 |
| Example 44 | Height of Plants (mm) | 55 | 268 | 452 | 695 | 1,049 |
| | Integrated Nutrient Solution Consumption (mL) | 100 | | 300 | | 400 |
| Days after Seeding (days) | | 43 | 48 | 55 | 63 | 74 |
| Soil Cultivation | Height of Plant (mm) | 730 | 740 | 760 | 1,080 | 1,340 |
| | Integrated Nutrient Solution Supply (mL) | 900 | 1,000 | | 1,200 | 1,600 |
| Example 44 | Height of Plants (mm) | 1,180 | 1,187 | 1,595 | 1,980 | 2,035 |
| | Integrated Nutrient Solution Consumption (mL) | 700 | 800 | | 1,000 | 1,200 |

[Table 88]

**Table 85 Comparison of Results of Soybean Growth, Nutrient Solution Supply/Consumption and Yield**

| Days after Seeding (days) | | 7 | 11 | 19 | 28 | 37 |
|---|---|---|---|---|---|---|
| Soil Cultivation | Height of Plants (mm) | 5 | 83 | 190 | 300 | 360 |
| | Integrated Nutrient Solution Supply (mL) | 200 | 500 | 800 | 1,300 | 1,600 |
| Example 45 | Height of Plants (mm) | 5 | 178 | 306 | 396 | 473 |
| | Integrated Nutrient Solution Consumption (mL) | | 300 | 600 | 700 | 1,000 |
| Days after Seeding (days) | | 42 | 49 | 55 | 62 | 70 |
| Soil Cultivation | Height of Plants (mm) | 380 | 400 | 400 | 400 | 405 |
| | Integrated Nutrient Solution Supply (mL) | 1,700 | 1,900 | | 2,100 | 2,200 |
| | Yield (g/seed) | | | | | 20.8 |
| Example 45 | Height of Plants (mm) | 495 | 517 | 534 | 539 | 539 |
| | Integrated Nutrient Solution Consumption (mL) | 1,100 | | 1,300 | 1,600 | 1,800 |
| | Yield (g/seed) | | | | | 28.8 |

[Table 89]

**Table 86 Comparison of Results of Cabbage Growth and Nutrient Solution Supply/Consumption**

| Days after Seeding (days) | | 11 | 24 | 36 | 44 | 52 |
|---|---|---|---|---|---|---|
| Soil Cultivation | Height of Plants (mm) | 6 | 19 | 35 | 46 | 63 |
| | Number of Leaves (pieces) | 2 | 4 | 6 | 7 | 10 |
| | Integrated Nutrient Solution Supply (mL) | 800 | 1,200 | 1,400 | 1,600 | 1,800 |
| Example 46 | Height of Plants (mm) | 10 | 23 | 52 | 61 | 83 |
| | Number of Leaves (pieces) | 2 | 5 | 7 | 9 | 12 |
| | Integrated Nutrient Solution Consumption (mL) | | 600 | | 1,000 | 1,200 |
| Days after Seeding (days) | | 59 | 67 | 74 | 81 | 88 |
| Soil Cultivation | Height of Plants (mm) | 63 | 90 | 105 | 120 | 142 |
| | Number of Leaves (pieces) | 12 | 14 | 16 | 20 | 22 |
| | Integrated Nutrient Solution Supply (mL) | 2,000 | 2,200 | 2,400 | 2,600 | 2,800 |
| Example 46 | Height of Plants (mm) | 83 | 116 | 153 | 195 | 232 |
| | Number of Leaves (pieces) | 18 | 22 | 24 | 26 | 28 |
| | Integrated Nutrient Solution Consumption (mL) | 1,400 | 1,600 | | 1,800 | |

[Table 90]

**Table 87 Comparison of Results of Grape tomato Growth and Nutrient Solution Supply/Consumption**

| Days after Seeding (days) | | 8 | 17 | 24 | 32 | 39 |
|---|---|---|---|---|---|---|
| Soil Cultivation | Height of Plants (mm) | | | 8 | 13 | 20 |
| | Number of Leaves (pieces) | | | 8 | 11 | 13 |
| | Integrated Nutrient Solution Supply (mL) | | | 1,200 | 1,400 | 1,600 |
| Example 47 | Height of Plants (mm) | 8 | 38 | 82 | 144 | 196 |
| | Number of Leaves (pieces) | 2 | 9 | 15 | 27 | 50 |
| | Integrated Nutrient Solution Consumption (mL) | | 400 | 600 | | 1,000 |
| Days after Seeding (days) | | 52 | 67 | 81 | 88 | |
| Soil Cultivation | Height of Plants (mm) | 26 | 53 | 90 | 128 | |
| | Number of Leaves (pieces) | 21 | 27 | 42 | 49 | |
| | integrated Nutrient Solution Supply (mL) | 1,800 | 2,200 | 2,600 | 2,800 | |
| Example 47 | Height of Plants (mm) | 328 | 570 | 720 | 758 | |
| | Number of Leaves (pieces) | 74 | 119 | 220 | 232 | |
| | Integrated Nutrient Solution Consumption (mL) | | 1,400 | 1,800 | 2,000 | |

### (Reference Example 11)

Synthetic pulps (SWP (registered trademark): E400, manufactured by Mitsui Chemicals, Inc.) pressed into the sheet form which is 5 mm thick were stacked so as to be firmly attached each other to prepare a cube with a size of 100 mm × 100 mm × 100 mm (in height), and the cube was then floated on the liquid surface of a nutrient solution (the composition is shown in Table 18) poured into a cultivation case to allow the nutrient solution to penetrate into the synthetic pulps from the lower part of the synthetic pulps. After a hole with a size of 20 mm × 20 mm × 10 mm (in depth) was formed on the upper surface of the cube, a broad bean seed was put in the hole (seeded on May 31, 2012). Twenty two days after seeding, when the plant grew up to approximately about 200 mm in height, *Aphis craccivora* was released to the plant in order to observe the transition of the number of surviving *Aphis craccivora*. The result is shown in Table 88 in contrast to the results of Examples 54 and 55.
[Table 91]

**Table 88 Comparison of Number of Surviving Aphis craccivora**

| Days after Insect Release (days) | | | 0 (before Insect Release) | 7 | 11 |
|---|---|---|---|---|---|
| | No Dinotefuran Treatment | Eggs | 0 | 6 | 154 |
| | | Larvae | 0 | 54 | 162 |
| | | Total (Eggs + Larvae) | 0 | 60 | 316 |
| Number of Surviving Insects | Example 54 | Eggs | 0 | 7 | 0 |
| | | Larvae | 0 | 129 | 0 |
| | | Total (Eggs + Larvae) | 0 | 136 | 0 |
| | Example 55 | Eggs | 0 | 108 | 0 |
| | | Larvae | 0 | 120 | 0 |
| | | Total (Eggs + Larvae) | 0 | 228 | 0 |
| (Ref) Days after Dinotefuran Treatment (days) | | | | 0 | 4 |

### (Reference Example 12)

Soybean was seeded in the same manner as that in Reference Example 6 but without any pesticide treatment against greenhouse whitefly in order to observe the transition of the number of the eggs of greenhouse whitefly under no pesticide treatment (seeded on June 28, 2012). The result is shown in Table 89 in contrast to the result of Example 56.
[Table 92]

**Table 89 Comparison of Number of Greenhouse Whitefly Eggs**

| Days after Seeding (days) | | 20 | 35 | 45 |
|---|---|---|---|---|
| Number of Greenhouse Whitefly Eggs | No Dinotefuran treatment | 9 | 69 | 174 |
| | Example 56 | 15 | 0 | 0 |
| (Ref) Days after Dinotefuran Treatment (days) | | 0 | 10 | 25 |

### (Reference Example 13)

Corn was seeded at a depth of 5 cm from the surface of soils, a nutrient solution (the composition is shown in Table 18) was in appropriate timing supplied depending on the corn growth, and appropriate agrochemical products were treated at the time when insects or diseases were observed in order to observe the growth of corn at 20 to 30°C and under natural light in a trial field having a roof (seeded on May 21, 2013). The results of the growth, the nutrient solution supply/consumption, the yield and the sugar content after harvesting are shown in Table 90 in contrast to the results of Example 67.
[Table 93]

**Table 90 Results of Corn Growth, Nutrient Solution Supply/Absorption, Yield and Sugar Content after Harvesting**

| Days after Seeding (days) | | 10 | 20 | 35 | 50 | 60 | 70 |
|---|---|---|---|---|---|---|---|
| Soil Cultivation | Height of Plants (mm) | 78 | 329 | 690 | 1,000 | 1,033 | |
| | Integrated Nutrient Solution Supply (L) | 165 | 325 | 505 | 790 | 860 | |
| | Average Yield (g/plant) | | | | | | 194 |
| | Average Sugar Content (Brix, %) | | | | | | 13.5 |
| Example 67 | Height of Plants (mm) | 204 | 679 | 1,226 | 1,465 | 1,490 | |
| | Integrated Nutrient Solution Consumption (L) | 66 | 82 | 125 | 255 | 268 | |
| | Average Yield (g/plant) | | | | | | 350 |
| | Average Sugar Content (Brix, %) | | | | | | 16.9 |

### (Reference Example 14)

Soybean was seeded at a depth of 5 cm from the surface of soils, a nutrient solution (the composition is shown in Table 18) was in appropriate timing supplied depending on the soybean growth, and approximate agrochemical products were treated at the time when insects or diseases were observed in order to observe the growth of soybean at 20 to 30°C and under natural light in a trial field having a roof (seeded on June 11, 2013). The results of the growth, the nutrient solution supply/consumption and the yield after harvesting are shown in Table 91 in contrast to the results of Example 73.
[Table 94]

**Table 91 Results of Soybean Growth, Nutrient Solution Supply/Consumption and Yield after Harvesting**

| Days after Seeding (days) | | 8 | 14 | 24 | 35 | 59 | 110 |
|---|---|---|---|---|---|---|---|
| Soil Cultivation | Height of Plants (mm) | 54 | 113 | 290 | 353 | 613 | |
| | Integrated Nutrient Solution Supply (L) | 145 | 185 | 340 | 580 | 1,045 | |
| | Average Yield (g/plant) | | | | | | 272 |
| Example 73 | Height of Plants (mm) | 77 | 151 | 348 | 449 | 709 | |
| | Integrated Nutrient Solution Consumption (L) | 59 | 68 | 111 | 145 | 259 | |
| | Average Yield (g/plant) | | | | | | 380 |

### Reference Signs List

1. Container
2. Plant Cultivation Material
3. Plant (Example)
4. Stopper Valve
5. Tubing
6. Liquid Supply Hole
6a. Member for Plant Cultivation Material to be set on/in
7. Plant Cultivation Material
8. Plant (Example)
9. Liquid Supply Tank
10. Stopper Valve
11. Tubing
12. Liquid Supply Hole
13. Plant Cultivation Material
14. Plant (Example)
15. Faucet of Water Supply
16. Intake of Water/Groundwater
17. Stopper Valve
18. Tubing
19. Liquid Supply Hole
20. Plant Cultivation Material
21. Plant (Example)
22. Faucet of Water Supply
23. Intake of Water/Groundwater
24. Liquid Supply Tank
25. Stopper Valve
26. Tubing
27. Liquid Supply Hole
28. Plant Cultivation Material
29. Plant (Example)

## Claims

1. A plant cultivation system to efficiently supply the elements necessary for the plant growth to a seed-nursery integrated plant cultivation material comprising the plant cultivation materials in which seeds and/or nurseries are put, and which provide a plant cultivation environment under which plants can absorb the amount of the elements necessary for the plant growth as much as plants want whenever plants want for the purpose of accelerating the plant growth.

2. A plant cultivation system to efficiently supply the elements necessary for the plant growth to a seed-nursery integrated plant cultivation material comprising the plant cultivation materials which have a liquid retentivity and a liquid transitivity, in which seeds and/or nurseries are put, and which provide a plant cultivation environment under which plants can absorb the amount of the elements necessary for the plant growth as much as plants want whenever plants want for the purpose of accelerating the plant growth.

3. A plant cultivation system to efficiently supply the elements necessary for the plant growth to a seed-nursery integrated plant cultivation material comprising the plant cultivation materials which are capable to retain the liquid containing at least one of water, a nutrient solution and agrochemical products, which have the cavities for smooth transitivity of the liquid in the materials, in which seeds and/or nurseries are put, and which provide a cultivation environment under which plants can absorb the amount of the elements necessary for the plant growth as much as plants want whenever plants want for the purpose of accelerating the plant growth.

4. A plant cultivation system to efficiently supply the elements necessary for the plant growth to a seed-nursery integrated plant cultivation material comprising the plant cultivation materials which are capable to retain the liquid containing at least one of water, a nutrient solution and agrochemical products, which have the cavities for smooth transitivity of the liquid in the materials, which comprise the layered structures capable to control the root growth, in which seeds and/or nurseries are put, and which provide a plant cultivation environment under which plants can absorb the amount of the elements necessary for the plant growth as much as plants want whenever plants want for the purpose of accelerating the plant growth.

5. A plant cultivation system to efficiently supply the elements necessary to the plant growth to a seed-nursery integrated plant cultivation material comprising the plant cultivation materials which are capable to retain the liquid containing at least one of water, a nutrient solution and agrochemical products, which have the cavities for smooth transitivity of the liquid in the materials, which comprise the layered structures capable to control the root growth so that roots can respire sufficient air, in which seeds and/or nurseries are put, and which provide a plant cultivation environment under which plants can absorb the amount of the elements necessary for the plant growth as much as plants want whenever plants want for the purpose of accelerating the plant growth.

6. A plant cultivation method using the plant cultivation system according to any one of claims 1 to 5.

7. A production method for the plant cultivation system according to any one of claims 1 to 5.

8. A plant growth element supply system to comprise the plant cultivation materials which provide a plant cultivation environment under which plants can absorb the amount of the elements necessary for the plant growth as much as plants want whenever plants want for the purpose of accelerating the plant growth, and the materials and/or the equipment and/or the facilities to efficiently supply the elements to the plant cultivation materials.

9. A plant cultivation method using the plant growth element supply system according to claim 8.

10. A plant growth element supply method using the plant growth element supply system according to claim 8.

11. A production method for the plant growth element supply system according to claim 8.
